# EUROPEAN PATENT APPLICATION

(11) **EP 4 841 418 A1**
(43) Date of publication of application: **18.11.2026**
(21) Application number: 26178433.4
(22) Date of filing: 13.05.2026
(51) Int. Cl.: G06F 3/06

(54) **MEMORY DEVICE INCLUDING COMMAND QUEUE, AND STORAGE DEVICE INCLUDING MEMORY DEVICE**

(30) Priority: 14.05.2025 KR 20250062848; 03.11.2025 KR 20250162906
(71) Applicant: Samsung Electronics Co., Ltd., Suwon-si, Gyeonggi-do 16677 (KR)
(72) Inventor: SONG, Seunghwan, 16677 Suwon-si (KR); CHOI, Yonghyuk, 16677 Suwon-si (KR); JEONG, Youngseok, 16677 Suwon-si (KR); KIM, Wandong, 16677 Suwon-si (KR); KIM, Suhyun, 16677 Suwon-si (KR)
(74) Representative: Marks & Clerk LLP

(57) **Abstract**

A memory device includes a memory cell array including a plurality of planes, and control logic. The control logic includes a command queue configured to store a plurality of commands received sequentially from a controller and a queue manager configured to reconfigure an execution order of memory operations respectively corresponding to the plurality of commands or types of the plurality of commands by merging at least two commands from among the plurality of commands to obtain the merged command. The control logic is configured to control a memory operation for the memory cell array according to the merged command.

## Description

### FIELD

The disclosure relates to a memory device, and more particularly, to a memory device including a command queue, and to a storage device including a memory device.

### BACKGROUND

In semiconductor memory devices, an efficient command processing structure is required for high-speed data processing. In general, a memory device immediately processes commands sequentially received from an external source, or stores the commands in an internal buffer for subsequent processing. However, in non-volatile memory devices such as NAND flash memory, because a program operation, a read operation, and an erase operation have complex timing and dependence, a simple sequential command processing method may not be enough for performance optimization. Accordingly, technologies for improving command processing performance while efficiently using internal resources of a memory device are required.

### SUMMARY

According to aspects of the disclosure, there is provided a memory device including a memory cell array including a plurality of planes, wherein each of the plurality of planes includes a plurality of memory blocks, and each of the plurality of memory blocks includes a plurality of pages, and control logic configured to control the memory cell array, wherein the control logic may include a command queue configured to store a plurality of commands received sequentially from a controller, and a queue manager configured to reconfigure an execution order of memory operations respectively corresponding to the plurality of commands or types of the plurality of commands by merging at least two commands from among the plurality of commands to obtain a merged command, and the control logic may be configured to control a memory operation for the memory cell array according to the merged command.

According to aspects of the disclosure, there is provided a storage device including a memory device including a plurality of planes, wherein each of the plurality of planes includes a plurality of memory blocks, and each of the plurality of memory blocks includes a plurality of pages and a controller configured to control the memory device, wherein the controller may include a command queue configured to store a plurality of commands received sequentially from a host and a queue manager configured to reconfigure an execution order of memory operations respectively corresponding to the plurality of commands or types of the plurality of commands by merging at least two commands from among the plurality of commands to obtain a merged command, the controller may be further configured to transmit the merged command to the memory device, and the memory device may be configured to perform a memory operation corresponding to the merged command.

According to aspects of the disclosure, there is provided a memory device including a memory cell array including a plurality of planes, wherein each of the plurality of planes includes a plurality of memory blocks, and each of the plurality of memory blocks includes a plurality of pages and control logic configured to store a plurality of commands sequentially received from a controller and reconfigure an execution order of memory operations respectively corresponding to the plurality of commands or types of the plurality of commands, wherein the control logic may be configured to merge first commands from among the plurality of commands based on a unit of a plane and perform first memory operations respectively corresponding to the first commands in a parallel manner or merge second commands from among the plurality of commands based on a unit of a page and perform second memory operations respectively corresponding to the second commands in a consecutive manner.

At least some of the above and other embodiments of the invention are set out in the claims.

### BRIEF DESCRIPTION OF THE DRAWINGS

Embodiments will be more clearly understood from the following detailed description taken in conjunction with the accompanying drawings in which:
FIG. 1 is a block diagram illustrating a storage device according to embodiments;
FIG. 2 is a block diagram illustrating a memory device including first to fourth planes, according to embodiments;
FIG. 3 is a block diagram illustrating in more detail a memory device according to embodiments;
FIG. 4 is a timing chart illustrating a command queueing operation according to embodiments;
FIG. 5 is a timing chart illustrating a command queueing operation according to embodiments;
FIG. 6 is a block diagram illustrating a storage device according to embodiments;
FIG. 7 is a block diagram illustrating a controller according to embodiments;
FIG. 8 is a timing chart illustrating a command queueing operation according to embodiments;
FIG. 9 is a flowchart illustrating an operation between a controller and a memory device according to embodiments;
FIG. 10 is a timing chart illustrating a command queueing operation according to embodiments;
FIG. 11 is a flowchart illustrating an operation between a controller and a memory device, according to embodiments;
FIG. 12 is a timing chart illustrating a command queueing operation according to embodiments;
FIG. 13 is a flowchart illustrating an operation between a controller and a memory device, according to embodiments;
FIG. 14 is a timing chart illustrating a command queueing operation according to embodiments;
FIG. 15 is a flowchart illustrating an operation between a controller and a memory device, according to embodiments;
FIG. 16A is a timing chart illustrating a read operation according to a comparative example, FIG. 16B is a timing chart illustrating a read operation according to a comparative example, and FIG. 16C is a timing chart illustrating a read operation according to embodiments;
FIG. 17A is a timing chart illustrating a program operation according to a comparative example, and FIG. 17B is a timing chart illustrating a program operation according to embodiments;
FIG. 18A is a timing chart illustrating a read operation according to a comparative example, FIG. 18B is a timing chart illustrating a read operation according to a comparative example, and FIG. 18C is a timing chart illustrating a read operation according to embodiments;
FIG. 19 is a flowchart illustrating an operation between a controller and a memory device, according to embodiments;
FIG. 20 is a timing chart illustrating a command queueing operation according to embodiments;
FIG. 21 is a flowchart illustrating an operation between a controller and a memory device, according to embodiments;
FIG. 22A is a timing chart illustrating a command queueing operation in a first queue mode, according to embodiments, and FIG. 22B is a timing chart illustrating a command queueing operation in a second queue mode, according to embodiments;
FIG. 23 is a flowchart of a method of operating a memory device according to embodiments;
FIG. 24 is a flowchart illustrating a command queueing operation method according to embodiments;
FIG. 25 is a flowchart illustrating a command queueing operation method according to embodiments; and
FIG. 26 is a diagram illustrating a command queueing operation and a queue release operation, according to embodiments.

### DETAILED DESCRIPTION

Hereinafter, embodiments will be described in detail with reference to the accompanying drawings. Like reference numerals in the drawings denote like elements, and any redundant description will be omitted.

The disclosure provides a memory device and a storage device each having improved core performance through a command queueing operation.

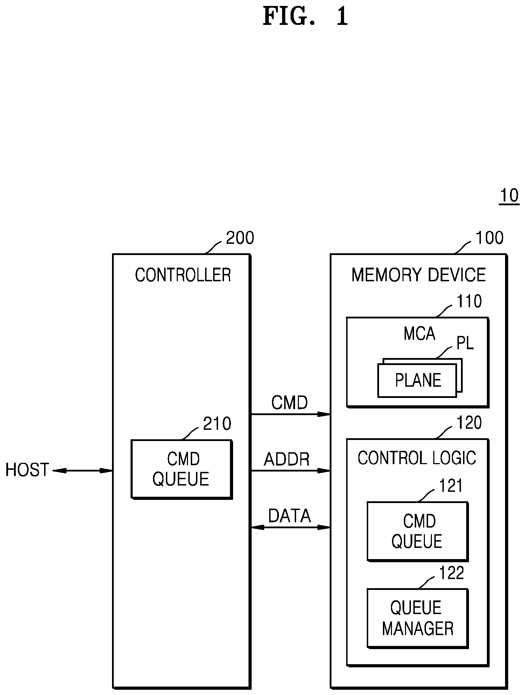

FIG. 1 is a block diagram illustrating a storage device 10 according to embodiments.

Referring to FIG. 1, the storage device 10 may include a memory device 100 and a controller 200. According to embodiments, the storage device 10 may be referred to as a memory system. The memory device 100 may include non-volatile memory, and the disclosure is described by focusing on embodiments in which the memory device 100 includes NAND flash memory. However, the disclosure is not limited thereto, and in embodiments, the memory device 100 may include volatile memory or include volatile memory and non-volatile memory.

The controller 200 may control, in response to a request or a command received from a host, the memory device 100 to read data stored in the memory device 100 or program data to the memory device 100. The controller 200 may include a command queue 210, and the command queue 210 may store commands received sequentially from the host. For example, the controller 200 may transmit to the memory device 100 a command CMD and an address ADDR which may instruct memory operations such as a read operation, a program operation, or an erase operation and transmit or receive data DATA to or from the memory device 100. In embodiments, the controller 200 may be referred to as a memory controller or a storage controller.

The memory device 100 may include a memory cell array 110 and control logic 120. The memory cell array 110 may include a plurality of planes PL, each plane may include a plurality of memory blocks, each memory block may include a plurality of pages, and each page may include a plurality of memory cells (e.g., non-volatile memory cells). In this regard, the plane may be defined as a memory unit that is operated independently and may be referred to as a memory array tile (MAT) in embodiments. In some embodiments, the memory device 100 may include a plurality of memory dies, and each memory die may include the memory cell array 110 and the control logic 120.

The control logic 120 may include a command queue 121 and a queue manager 122. The command queue 121 may queue or store the plurality of commands sequentially received from the controller 200. The queue manager 122 may reconfigure a command order and/or a command type with respect to the commands queued or stored in the command queue 121. The control logic 120 may control memory operations for the memory cell array 110 according to the reconfigured commands. As such, the queue manager 122 may be included in the memory device 100, and accordingly, the queue manager 122 may be referred to as an on-chip queue manager.

In embodiments, the control logic 120 may activate a queue mode or a queueing mode based on a set feature command received from the controller 200. Throughout the specification, the queue mode and the queueing mode mean substantially the same, and both terms may be used. For example, the set feature command may include a set value for enabling the queue manager 122. For example, the set feature command may include a set value representing a first queue mode in which a space axis is prioritized or a second queue mode in which a time axis is prioritized. In embodiments, the control logic 120 may receive from the controller 200 an individual command instructing the queue mode.

In embodiments, when the queue mode is activated, the control logic 120 may store a user command received from the controller 200 in the command queue 121 and may not immediately perform a memory operation corresponding to the user command. Accordingly, the user command may act as a queueing command. In embodiments, the control logic 120 may merge the commands queued in the command queue 121, based on a queue execution command received from the controller 200 (for example, a queue read command or a queue program command) and perform a memory operation according to the merged command. In embodiments, the controller 200 may periodically issue a queue execution command and periodically transmit the queue execution command to the memory device 100.

In general, a random read operation may not be performed based on a full plane unit. Accordingly, the plane utilization may decrease, as compared to a full plane-based operation, and as a result, the core throughput of the memory device may be reduced. To overcome such issues, the memory access may be scheduled in the memory device 100 for a plurality of planes or all planes in a space domain through command queueing, thereby improving the performance of the memory device 100. More specifically, the queue manager 122 may optimize the execution order of the commands in the command queue 121 to increase the simultaneous utilization of the plane resource.

In embodiments, the queue manager 122 may merge at least two commands from among a plurality of commands, and by doing so, the execution order of memory operations corresponding to the plurality of commands may be changed. For example, the queue manager 122 may merge the commands queued in the command queue 121 based on the unit of a plane. Accordingly, the control logic 120 may perform memory operations respectively corresponding to the plurality of planes PL in a simultaneous manner or in a parallel manner according to the merged command. In this manner, the simultaneous utilization of the plane resource may increase, and the time required for the memory operations may be reduced, which leads to improved performance of the memory device 100.

In addition, to reduce the read time of the memory device, in a read operation of a multi logic cell having consecutive addresses (for example, LSB -> CSB -> MSB), a charge recycle may be performed between the read operations. However, such charge recycle between read operations may be possible only when the controller transmits the next command within a certain time period, and when such conditions is not meet, the read time improvement according to the charge recycle may not be secured. To overcome such issues, in the memory device 100, the memory units (e.g., pages) in a single plane may be merged in a time domain through the command queueing, thereby improving the performance of the memory device 100 through the charge recycle. More specifically, to meet certain time conditions required for the read operation of the multi logic cell, by merging read commands for consecutive addresses, the read time may be reduced through the charge recycle.

In embodiments, the queue manager 122 may change types of a plurality of commands and by doing so, the queue manager 122 may change operation time of memory operations corresponding to the plurality of commands. For example, the queue manager 122 may merge commands queued for one plane based on a memory unit such as a page, a string select line, a word line, or a logic bit. For example, the queue manager 122 may change the type of the read commands queued for one plane from a normal read command to a cache read command. A normal read operation may include a sensing operation and a word line recovery operation, whereas a cache read operation may omit a word line recovery operation after a sensing operation as the cache read operation uses charge recycling. Accordingly, the normal read operation may take more time than the cache read operation. The control logic 120 may consecutively perform read operations for a plurality of pages included in one plane according to the changed command.

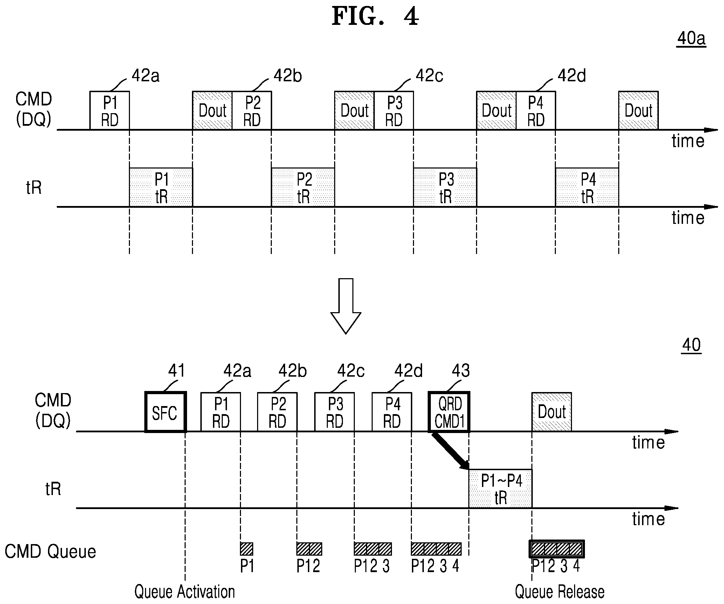

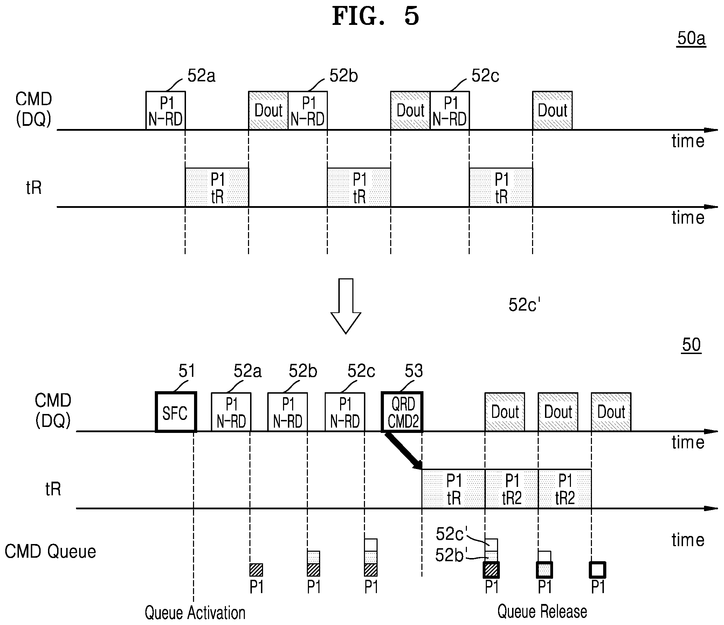

As such, by performing the on-chip command queueing based on the command queue 121 and the queue manager 122, the memory device 100 according to the embodiments may improve the performance of the memory device 100. More specifically, as the full plane resource utilization increases even in a random workload environment, and the core throughput of the memory may be improved, which is to be described in detail in relation to FIGS. 4 and 8 to 17B. In addition, during the read operation of the multi logic cell, the timing constraint of the controller may be relaxed, and the charge recycle method may be applied stably. Accordingly, time-saving effect may be secured. This is to be described in detail in relation to FIGS. 5 and 18A to 21.

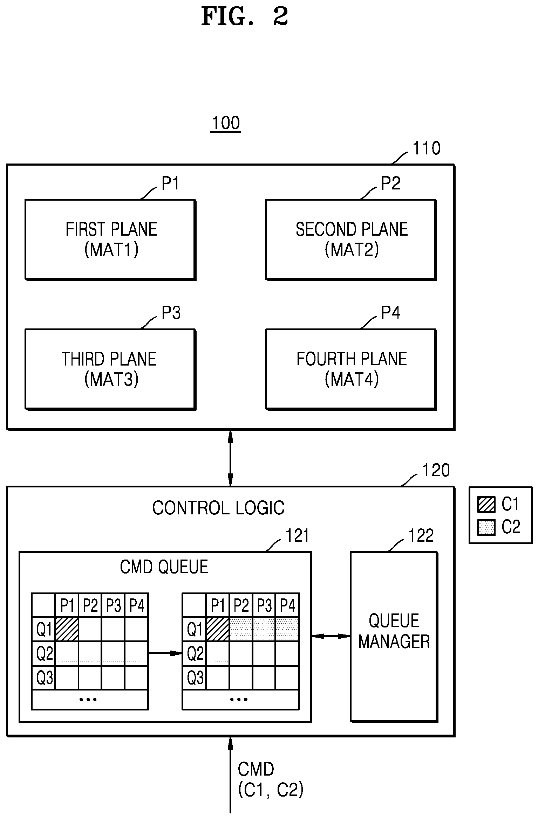

FIG. 2 is a block diagram illustrating the memory device 100 including first to fourth planes P1 to P4 according to embodiments.

Referring to FIGS. 1 and 2, the memory cell array 110 may include the first to fourth planes P1 to P4. For example, the first to fourth planes P1 to P4 may respectively correspond to first to fourth MATs MAT1 to MAT4. However, the disclosure is not limited thereto, and the number of planes included in the memory cell array 110 may vary according to embodiments.

The control logic 120 may sequentially receive from the controller 200 a plurality of commands including a first command C1 and a second command C2. For example, the first command C1 may be a read command or a program command which corresponds to a first plane P1. For example, the second command C2 may be read command corresponding to the first to fourth planes P1 to P4 (i.e., a full plane read command) or a program command corresponding to the first to fourth planes P1 to P4 (i.e., a full plane program command). The command queue 121 may first store the first command C1 in a first queue Q1 and then store the second command C2 in a second queue Q2.

The queue manager 122 may reconfigure the first and second commands C1 and C2 stored in the command queue 121. In embodiments, the queue manager 122 may reconfigure, in response to the set feature command received from the controller 200, the first and second commands C1 and C2 according to predefined conditions. In embodiments, the queue manager 122 may reconfigure, in response to a reconfigure command received from the controller 200, the first and second commands C1 and C2. In embodiments, the queue manager 122 may reconfigure the first and second commands C1 and C2 in response to a queue execution command received from the controller 200 (e.g., a queue read command or a queue program command).

In embodiments, the queue manager 122 may change the execution order of the memory operations respectively corresponding to the first and second commands C1 and C2 stored in the command queue 121. In embodiments, the queue manager 122 may change the types of the first and second commands C1 and C2 stored in the command queue 121. In embodiments, the queue manager 122 may merge the first and second commands C1 and C2 by the space axis, which is to be described in detail in relation to FIGS. 4 and 8 to 17B. In embodiments, the queue manager 122 may merge the first and second commands C1 and C2 by the time axis, which is to be described in detail in relation to FIGS. 5 and 18A to 21.

For example, the queue manager 122 may move the second command C2 corresponding to the second to fourth planes P2 to P4, which is stored in the second queue Q2, to the first queue Q1. In this manner, the first queue Q1 may store the first command C1 corresponding to the first plane P1 and the second command C2 corresponding to the second to fourth planes P2 to P4. The second queue Q2 may store the second command C2 corresponding to the first plane P1. Accordingly, a memory operation corresponding to the first plane P1 according to the first command C1 and memory operations corresponding to the second to fourth planes P2 to P4 according to the second command C2 may be executed first, and a memory operation corresponding to the first plane P1 according to the second command C2 may be executed later.

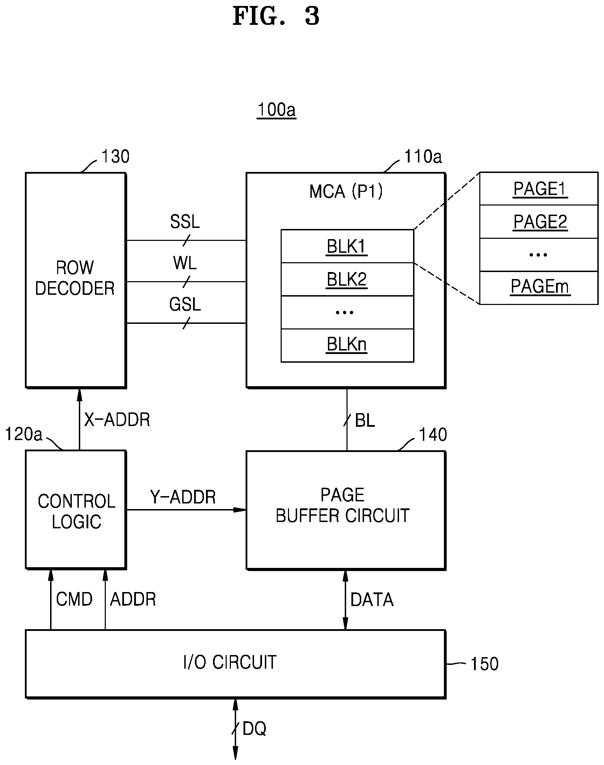

FIG. 3 is a block diagram illustrating in more detail a memory device 100a according to embodiments.

Referring to FIG. 3, the memory device 100a may include a memory cell array 110a, control logic 120a, a row decoder 130, a page buffer circuit 140, and an input/output (I/O) circuit 150. For example, the memory device 100a may correspond to the memory device 100 of FIGS. 1 and 2, and hereinafter, components of the memory device 100a are described by referring to FIGS. 1 and 3. The I/O circuit 150 may provide the command CMD and the address ADDR received from the controller 200 to the control logic 120a and provide the data DATA to the page buffer circuit 140.

In embodiments, the command CMD, the address ADDR, and the data DATA may be transmitted through a data signal DQ, and the data signal DQ may be synchronized with a data strobe signal and may be transmitted through a data signal line. However, the disclosure is not limited thereto, and in some embodiments, the controller 200 and the memory device 100a may communicate with each other by a separate command address (SCA) method in which the command CMD and the address ADDR are transmitted separately from the data DATA. For example, the command CMD and the address ADDR may be synchronized with a command/address clock signal and may be transmitted through a command/address signal line, whereas the data DATA may be synchronized with a data strobe signal and may be transmitted through a data signal line.

For example, the memory cell array 110a (MCA) may include the first plane P1, and the first plane P1 may include a plurality of memory blocks (BLK1 to BLKn, wherein n is a natural number). Each memory block, for example, a memory block BLK1 may include a plurality of pages (PAGE1 to PAGEm, wherein m is a natural number). For example, the memory block may be a unit of erasing, and the page may be a unit of writing and reading. The memory cell array 110a may be connected to the row decoder 130 through word lines WL, string select lines SSL, and ground select lines GSL and may be connected to the page buffer circuit 140 through bit lines BL. The description of the first plane P1 may be applied to the second to fourth planes P2 to P4 as well.

For example, the memory cells included in the memory cell array 110a may be NAND flash memory cells. However, the disclosure is not limited thereto, and in some embodiments, the memory cells may include magnetic random access memory (MRAM), pin-transfer torque MRAM, conductive bridging RAM (CBRAM), ferroelectric RAM (FeRAM), phase RAM (PRAM), resistive RAM, and other various types of memory.

In some embodiments, the memory cell array 110a may include a three-dimensional (3D) memory cell array, and the 3D memory cell array may include a plurality of NAND strings. Each NAND string may include memory cells respectively connected to word lines vertically stacked on a substrate. The disclosure may be combined with U.S. Patent Publication No. 7,679,133, U.S.

Patent Publication No. 8,553,466, U.S. Patent Publication No. 8,654,587, U.S. Patent Publication No. 8,559,235, and U.S. Patent Application Publication No. 2011/0233648 which are cited in the specification. In some embodiments, the memory cell array 110a may include a 2D memory cell array, and the 2D memory cell array may include a plurality of NAND strings that are arranged in a row direction and a column direction.

The control logic 120a may control all operations of the memory device 100a. More specifically, the control logic 120a may be configured to control memory operations for the plurality of memory cells included in the memory cell array 110a. For example, the memory operation may include at least one of a program operation, a read operation, and an erase operation. In some embodiments, the control logic 120a may receive the command CMD and the address ADDR from the I/O circuit 150 and may output, in response to the received command CMD and address ADDR, various control signals, e.g., a row address X_ADDR and a column address Y_ADDR.

In this embodiment, the control logic 120a may perform the on-chip command queueing by using the on-chip queue manager, thereby improving the performance of the memory device 100a. More specifically, the control logic 120a may merge certain commands in a space domain and/or a time domain and control memory operations based on the merged commands. By doing so, the full plane resource utilization may increase even in a random workload environment, and the core throughput of the memory may be improved. In addition, during the read operation of the multi logic cell, the timing constraint of the controller may be relaxed, and the charge recycle method may be applied stably. Accordingly, time-saving effect may be secured.

The row decoder 130 may select one of the plurality of word lines WL in response to the row address X_ADDR and select one of the plurality of string select lines SSL. For example, when the program operation is performed, the row decoder 130 may apply a program voltage and a program verify voltage to a selected word line, and when the read operation is performed, the row decoder 130 may apply a read voltage to the selected word line.

The page buffer circuit 140 may include a plurality of page buffers, and the plurality of page buffers may respectively be connected to the memory cells through the plurality of bit lines BL. The page buffer circuit 140 may select at least one of the bit lines BL in response to the column address Y_ADDR. The page buffer circuit 140 may operate as a writing driver or a sense amplifier according to an operation mode.

FIG. 4 is a timing chart illustrating a command queueing operation 40 according to embodiments.

Referring to FIGS. 1 and 4, a comparative example 40a illustrates a case in which a memory device does not include a command queue and a queue manager, and the command queueing operation 40 below represents a command queueing operation in a case where the memory device 100 includes the command queue 121 and the queue manager 122 according to embodiments. According to the comparative example 40a, the memory device may perform, in response to each of read commands 42a to 42d for first to fourth planes P1 to P4, a read operation corresponding to each plane for read time tR and perform a data output operation Dout outputting read data. Accordingly, the read time taken for the read operation may correspond to 4*tR.

According to the embodiments, when the controller 200 transmits a set feature command (SFC) 41 for setting a queue mode to the memory device 100, the queue mode may be activated in the memory device 100. When the queue mode is activated, the memory device 100 may perform the on-chip command queueing operation. Then, the controller 200 may sequentially transmit to the memory device 100 a read command 42a for the first plane P1, a read command 42b for the second plane P2, a read command 42c for the third plane P3, and a read command 42d for the fourth plane P4. The memory device 100 may sequentially store the read commands 42a to 42d for the first to fourth planes P1 to P4 in the command queue 121. Throughout the specification, the queueing operations for different planes may be referred to as a space domain queueing operation or a space axis queueing operation.

Next, the controller 200 may transmit to the memory device 100 a queue execution command instructing performance of a plane merge operation and a read operation for read commands stored in the command queue 121, e.g., a first queue read command 43. The first queue read command 43 may instruct merging of read commands queued based on a space domain and execution of a memory access according to the merged read command. In response to the first queue read command 43, the memory device 100 may merge the read commands 42a to 42d stored in correspondence with the first to fourth planes P1 to P4, respectively and perform the read operations for the first to fourth planes P1 to P4 for the read time tR based on the merged read command. After a lapse of the read time tR, the memory device 100 may perform the data output operation Dout for transmitting read data to the controller 200 and simultaneously release the read commands 42a to 42d stored in the command queue 121. Accordingly, the time taken for the entire read operation may correspond to tR, which is significantly reduced from the time in the comparative example 40a.

FIG. 5 is a timing chart illustrating a command queueing operation 50 according to embodiments.

Referring to FIGS. 1 and 5, a comparative example 50a illustrates a case in which a memory device does not include a command queue and a queue manager, and the command queueing operation 50 below represents a command queueing operation in a case where the memory device 100 includes the command queue 121 and the queue manager 122 according to embodiments. According to the comparative example 50a, the memory device may perform, in response to each of normal read commands 52a to 52c for a first plane P1, a read operation corresponding to each normal read command for first read time tR1 (tR) and perform a data output operation Dout outputting read data. Accordingly, the read time taken for the read operation may correspond to 3*tR1 (tR). In this regard, the first read time tR1 may include sensing time and word line recovery time.

According to the embodiments, when the controller 200 transmits a set feature command 51 for setting a queue mode to the memory device 100, the queue mode may be activated in the memory device 100. When the queue mode is activated, the memory device 100 may perform the on-chip command queueing operation. Then, the controller 200 may sequentially transmit to the memory device 100 a first normal read command 52a for the first plane P1, a second normal read command 52b for the first plane P1, and a third normal read command 52c for the first plane P1. The memory device 100 sequentially may store the first to third normal read commands 52a to 52c for the first plane P1 in the command queue 121. Throughout the specification, the queueing operations for the same plane may be referred to as a time domain queueing operation or a time axis queueing operation.

For example, the first normal read command 52a may instruct a read operation for a first address of the first plane P1, e.g., a first page PAGE1, the second normal read command 52b may instruct a read operation for a second address of the first plane P1, e.g., a second page PAGE2, and the third normal read command 52c may instruct a read operation for a third address of the first plane P1, e.g., a third page PAGE3. In some embodiments, at least one of string select lines SSL, word lines WL, and logic bits (e.g., LSB, CSB, and MSB) of a plurality of addresses of the first plane P1 may be different from each other.

Next, the controller 200 may transmit to the memory device 100 a queue execution command instructing performance of read operations corresponding to a plurality of read commands stored in the command queue 121, e.g., a second queue read command 53. The second queue read command 53 may change the type of the read commands queued based on a time domain from a normal read command to a cache read command and instruct execution of a memory access according to the changed cache read command. In response to the second queue read command 53, the memory device 100 may maintain the first normal read command 52a and change the second and third normal read commands 52b and 52c to first and second cache read commands 52b' and 52c', respectively.

First, the memory device 100 may perform a normal read operation for the first address of the first plane P1 (e.g., the first page PAGE1) for first read time tR1 (tR) based on the first normal read command 52a and release the first normal read command 52a from the command queue 121. Next, the memory device 100 may perform a cache read operation for the second address of the first plane P1 (e.g., the second page PAGE2) for second read time tR2 based on the first cache read command 52b' and release the first cache read command 52b' from the command queue 121. Then, the memory device 100 may perform a cache read operation for the third address of the first plane P1 (e.g., the third page PAGE3) for second read time tR2 based on the second cache read command 52c' and release the second cache read command 52c' from the command queue 121. As such, the time taken for the entire read operation may correspond to 1*tR1+2*tR2, which is significantly reduced from the total read time in the comparative example 50a.

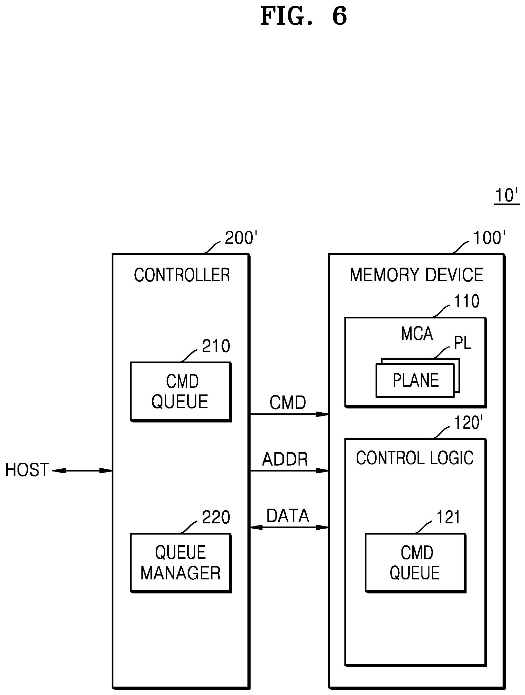

FIG. 6 is a block diagram illustrating a storage device 10' according to embodiments.

Referring to FIG. 6, the storage device 10' may include a memory device 100' and a controller 200', and the memory device 100' may include a memory cell array 110 and control logic 120'. The storage device 10' may correspond to a modification example of the storage device 10 of FIG. 1, and accordingly, the description provided in relation to FIGS. 1 to 5 may be applied to this embodiment as well.

According to the embodiments, the controller 200' may include a command queue 210 and a queue manager 220. The command queue 210 may store a plurality of commands sequentially received from a host. The queue manager 220 may reconfigure an order and/or a type of the plurality of commands and transmit the reconfigured commands to the memory device 100'. In embodiments, the queue manager 220 may merge at least two commands from among a plurality of commands, and by doing so, the execution order of memory operations corresponding to the plurality of commands may be changed. In embodiments, the queue manager 220 may change the type of the plurality of commands and reconfigure the commands by changing the normal read commands to the cache read commands.

As such, by merging at least two commands from among the plurality of commands, the queue manager 220 may reconfigure the execution order of the memory operations respectively corresponding to the commands or the type of the plurality of commands. The controller 200' may transmit the merged command to the memory device 100', and the memory device 100' may perform a memory operation corresponding to the merged command.

In embodiments, the command queue 210 may store a first command corresponding to a first plane from among a plurality of planes and a second command corresponding to a second plane from among the plurality of planes, and the queue manager 220 may merge the first command and the second command and store the merged command in the command queue 210. In this regard, the memory device 100' may perform a first memory operation corresponding to the first plane and a second memory operation corresponding to the second plane in a parallel manner according to the merged command.

In embodiments, the command queue 210 may store a first command corresponding to a first page from among a plurality of pages and a second command corresponding to a second page from among the plurality of pages, and the queue manager 220 may merge the first command and the second command and store the merged command in the command queue 210. In this regard, the memory device 100' may perform a first memory operation corresponding to the first page and a second memory operation corresponding to the second page in a consecutive manner according to the merged command.

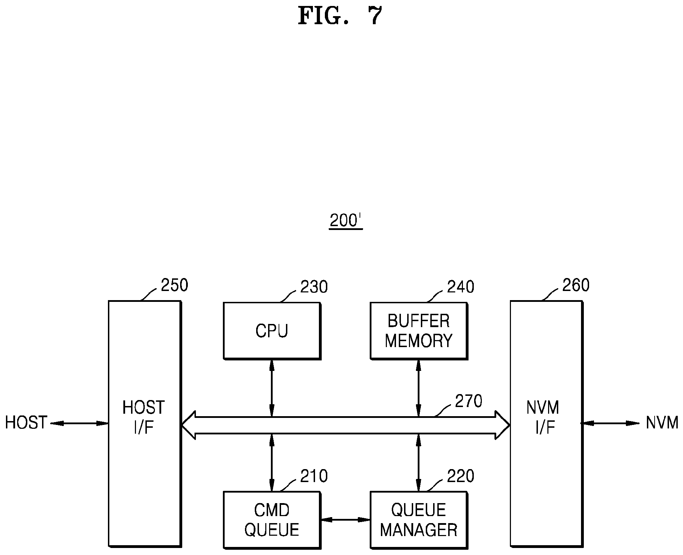

FIG. 7 is a block diagram illustrating the controller 200' according to embodiments.

Referring to FIGS. 6 and 7, the controller 200' may include a command queue 210, a queue manager 220, a central processing unit (CPU) 230, a buffer memory 240, a host interface 250, and a non-volatile memory interface 260, which communicate with each other through a bus 270. According to the embodiments, the CPU 230 may control the overall command queueing operation. For example, the CPU 230 may activate a command queueing operation or control the command queueing conditions, priority, etc, in regard to the space axis, or the time axis.

The host interface 250 may receive or transmit a packet from or to the host. The packet transmitted from the host to the host interface 250 may include a command or data, etc. to be recorded onto the memory device 100', and the packet transmitted from the host interface 250 to the host may include a response to the command, data, etc. read from the memory device 100'. The buffer memory 240 may buffer data to be recorded onto the memory device 100' or data read from the memory device 100'.

The non-volatile memory interface 260 may transmit to the memory device 100' data to be programmed to non-volatile memory, e.g., the memory device 100' or receive read data from the memory device 100'. Such non-volatile memory interface 260 may comply with the standards such as Toggle or open NAND flash interface (ONFI). According to the embodiments, the non-volatile memory interface 260 may transmit to the memory device 100' a set feature command for setting a queue mode for the memory device 100', a user command (e.g., a program command, a read command, or an erase command), or a queue execution command (e.g., a queue read command or a queue program command).

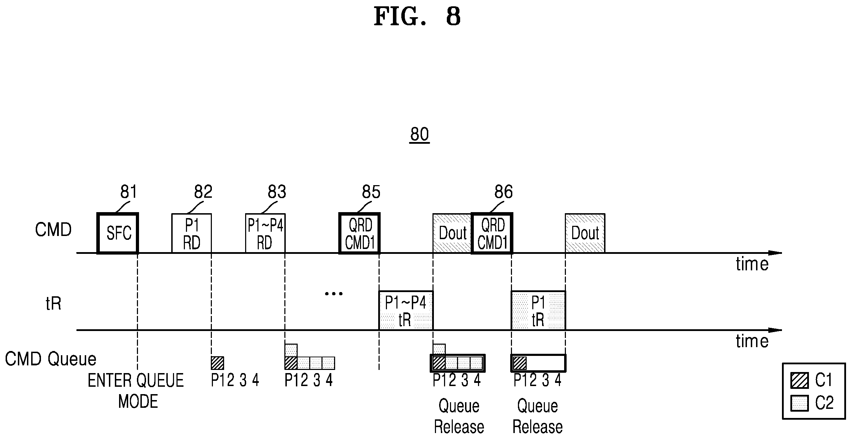

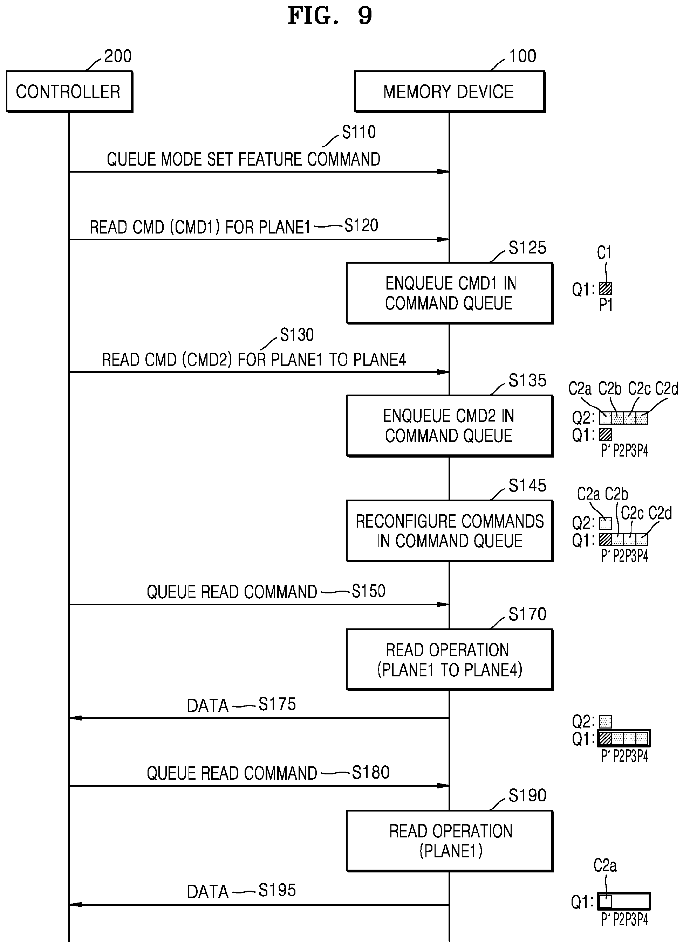

FIG. 8 is a timing chart illustrating a command queueing operation 80 according to embodiments. FIG. 9 is a flowchart illustrating an operation between the controller 200 and the memory device 100 according to embodiments.

Referring to FIGS. 1, 8, and 9, in operation S110, the controller 200 may transmit a set feature command 81 (e.g., a queue mode set feature command) for setting a queue mode to the memory device 100. In response to the set feature command 81, the memory device 100 may activate the queue mode. In operation S120, the controller 200 may transmit to the memory device 100 a read command 82 for the first plane P1. In operation S125, in response to the read command 82, the memory device 100 may store (enqueue) the read command 82 in the command queue 121 as the first command C1 for the first plane P1. For example, the memory device 100 may store the first command C1 in the first queue Q1.

In operation S130, the controller 200 may transmit to the memory device 100 a read command 83 for the first to fourth planes P1 to P4. In operation S135, in response to the read command 83, the memory device 100 may store the read command 83 in the command queue 121 as second commands C2a to C2d for the first to fourth planes P1 to P4. For example, the memory device 100 stores the second commands C2a to C2d in the second queue Q2. Without the queue manager 122, a read operation for the first plane P1 corresponding to the first command C1 of the first queue Q1 may be performed, and then read operations for the first to fourth planes P1 to P4 corresponding to the second commands C2a to C2d of the second queue Q2 may be performed. However, according to the embodiments, the read commands 82 and 83 may act as a queueing command, memory operations corresponding to the read commands 82 and 83 may not be performed immediately, and the read commands 82 and 83 may be queued in the command queue 121.

In operation S145, the memory device 100 may reconfigure the commands stored in the command queue 121. For example, the memory device 100 may move the second commands C2b, C2c, and C2d stored in the second queue Q2 to the first queue Q1. By doing so, the first queue Q1 may store the first command C1 for the first plane P1 and the second commands C2b, C2c, and C2d for the second to fourth planes P2 to P4, and the second queue Q2 may store the second command C2a for the first plane P1. As such, when the queue mode is activated, the memory device 100 may reconfigure the commands stored in the command queue 121 even without receiving a reconfigure command.

In operation S150, the controller 200 may transmit to the memory device 100 a queue execution command instructing execution of a plane merge operation and a read operation for read commands stored in the command queue 121, e.g., a first queue read command 85. In this regard, the first queue read command 85 may instruct a merging operation of commands stored according to the space axis and a memory operation according to the merged command. In operation S170, in response to the first queue read command 85, the memory device 100 may merge the first command C1 corresponding to the first plane P1 and the second commands C2b to C2d respectively corresponding to the second to fourth planes P2 to P4 and perform a read operation for the first to fourth planes P1 to P4 for the read time tR based on the merged read command. After a lapse of the read time tR, in operation S175, the memory device 100 may perform the data output operation Dout for transmitting read data to the controller 200 and release the read commands C1 and C2b to C2d stored in the command queue 121 from the command queue 121.

In operation S180, the controller 200 may transmit to the memory device 100 a queue execution command, e.g., a first queue read command 86 instructing execution of a plane merge operation and a read operation for the read commands stored in the command queue 121. In this regard, the first queue read command 86 may instruct a merging operation for the commands stored according to the space axis and a memory operation according to the merged command. In operation S190, in response to the first queue read command 86, the memory device 100 may perform a read operation for the first plane P1 for the read time tR based on the second command C2a corresponding to the first plane P1. In this regard, as a queue corresponding to the second to fourth planes P2 to P4 is empty in the command queue 121 of the memory device 100, the memory device 100 may perform a read operation only for the first plane P1. After a lapse of the read time tR, in operation S195, the memory device 100 perform the data output operation Dout for transmitting read data to the controller 200 and release and erase the read command C2a stored in the command queue 121 from the command queue 121.

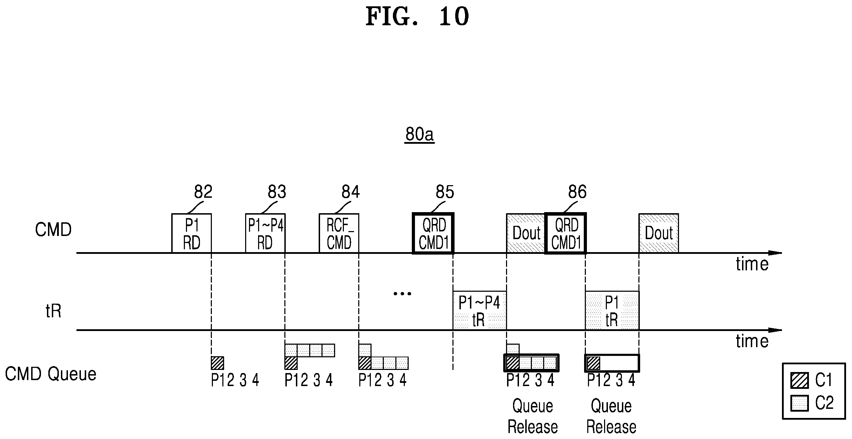

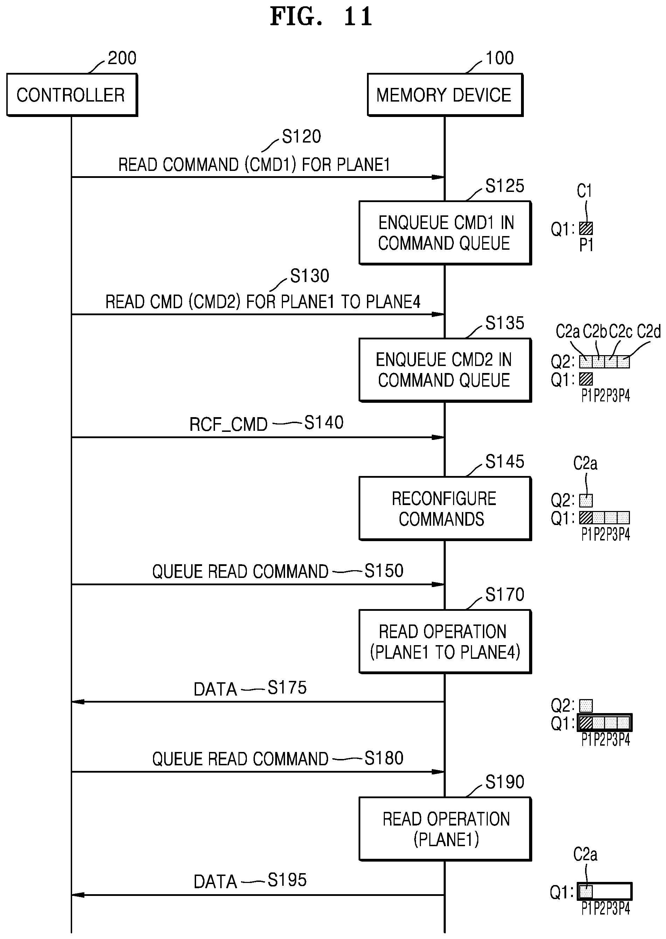

FIG. 10 is a timing chart illustrating a command queueing operation 80a according to embodiments. FIG. 11 is a flowchart illustrating an operation between the controller 200 and the memory device 100 according to embodiments.

Referring to FIGS. 10 and 11, the command queueing operation 80a may correspond to a modification example of the command queueing operation 80 of FIG. 8, and the description provided in relation to FIGS. 8 and 9 may be applied to this embodiment as well. According to the embodiments, the controller 200 may not transmit a set feature command for setting a queue mode to the memory device 100. Accordingly, as the queue mode is not activated initially in the memory device 100, commands sequentially received from the controller 200 may be sequentially queued in the command queue.

In operation S120, the controller 200 may transmit the read command 82 for the first plane P1. In operation S125, in response to the read command 82, the memory device 100 may store the read command 82 in the command queue 121 as the first command C1 for the first plane P1. In operation S130, the controller 200 may transmit to the memory device 100 the read command 83 for the first to fourth planes P1 to P4. In operation S135, in response to the read command 83, the memory device 100 may store the read command 83 in the command queue 121 as second commands C2a to C2d for the first to fourth planes P1 to P4.

In operation S140, the controller 200 may transmit a reconfigure command RCF_CMD 84 instructing reconfiguration of the commands queued in the memory device 100. In operation S145, in response to the reconfigure command 84, the memory device 100 may reconfigure the commands stored in the command queue 121. For example, the memory device 100 may move the second commands C2b, C2c, and C2d stored in the second queue Q2 to the first queue Q1. By doing so, the first queue Q1 may store the first command C1 for the first plane P1 and the second commands C2b, C2c, and C2d for the second to fourth planes P2 to P4, and the second queue Q2 may store the second command C2a for the first plane P1.

In operation S150, the controller 200 may transmit to the memory device 100 the first queue read command 85 instructing execution of a plane merge operation and a read operation for the read commands stored in the command queue 121. In operation S170, in response to the first queue read command 85, the memory device 100 may merge the first command C1 corresponding to the first plane P1 and the second commands C2b to C2d respectively corresponding to the second to fourth planes P2 to P4 and perform a read operation for the first to fourth planes P1 to P4 for the read time tR based on the merged read command. After a lapse of the read time tR, in operation S175, the memory device 100 perform the data output operation Dout for transmitting read data to the controller 200 and release the read commands C1 and C2b to C2d stored in the command queue 121 from the command queue 121.

In operation S180, the controller 200 may transmit to the memory device 100 the first queue read command 86 instructing execution of a plane merge operation and a read operation for the read commands stored in the command queue 121. In this regard, the first queue read command 86 may instruct merging of the commands stored according to the space axis and a memory operation according to the merged command. In operation S190, in response to the first queue read command 86, the memory device 100 may perform a read operation for the first plane P1 for the read time tR based on the second command C2a corresponding to the first plane P1. In this regard, as a queue corresponding to the second to fourth planes P2 to P4 is empty in the command queue 121 of the memory device 100, the memory device 100 may perform a read operation only for the first plane P1. After a lapse of the read time tR, in operation S195, the memory device 100 may perform the data output operation Dout for transmitting read data to the controller 200 and release and erase the read command C2a stored in the command queue 121 from the command queue 121.

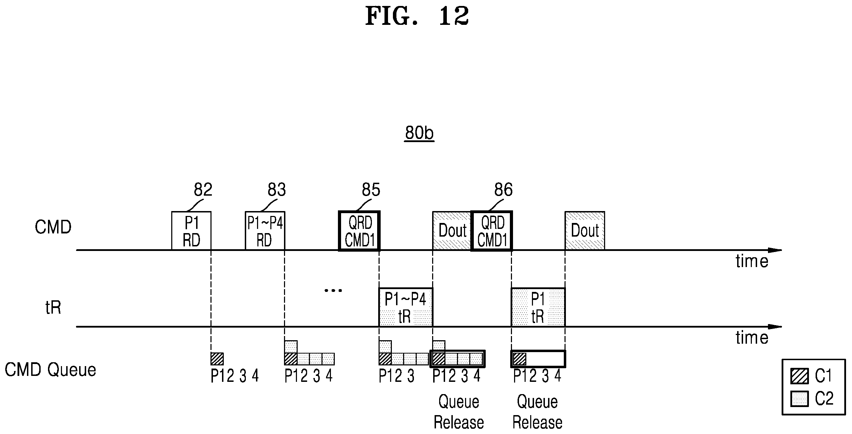

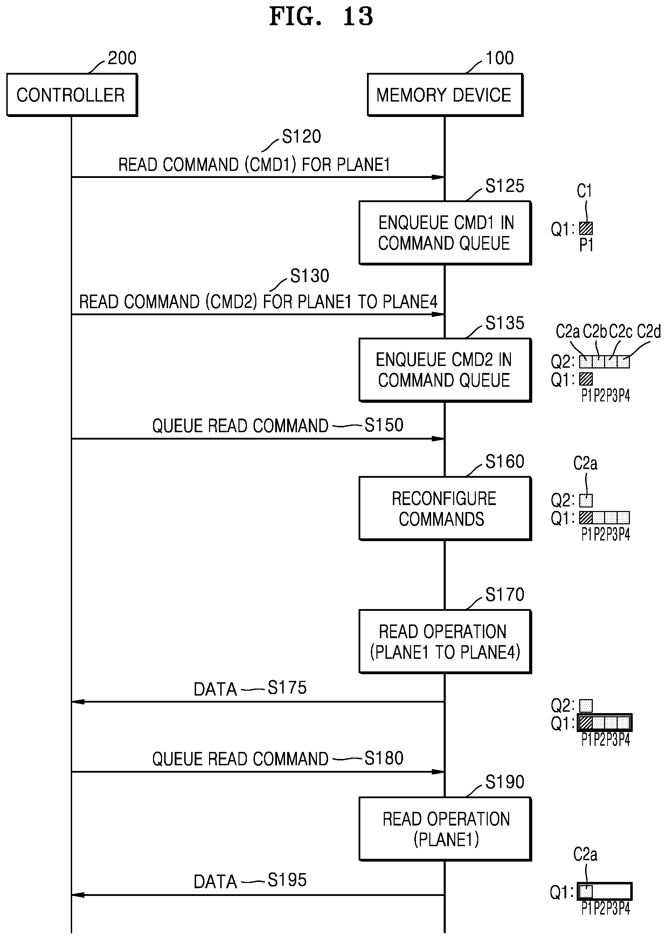

FIG. 12 is a timing chart illustrating a command queueing operation 80b according to embodiments. FIG. 13 is a flowchart illustrating an operation between the controller 200 and the memory device 100 according to embodiments.

Referring to FIGS. 12 and 13, the command queueing operation 80b may correspond to a modification example of the command queueing operation 80a of FIG. 10, and the description provided in relation to FIGS. 10 and 11 may be applied to this embodiment as well. In operation S120, the controller 200 may transmit the read command 82 for the first plane P1. In operation S125, in response to the read command 82, the memory device 100 may store the read command 82 in the command queue 121 as the first command C1 for the first plane P1. In operation S130, the controller 200 may transmit to the memory device 100 the read command 83 for the first to fourth planes P1 to P4. In operation S135, in response to the read command 83, the memory device 100 may store the read command 83 in the command queue 121 as second commands C2a to C2d for the first to fourth planes P1 to P4.

In operation S150, the controller 200 may transmit to the memory device 100 the first queue read command 85 instructing execution of a plane merge operation and a read operation for the read commands stored in the command queue 121. In operation S160, in response to the first queue read command 85, the memory device 100 may reconfigure the commands stored in the command queue 121 and merge the planes. For example, the memory device 100 may move the second commands C2b, C2c, and C2d stored in the second queue Q2 to the first queue Q1. By doing so, the first queue Q1 may store the first command C1 for the first plane P1 and the second commands C2b, C2c, and C2d for the second to fourth planes P2 to P4, and the first command C1 and the second commands C2b, C2c, and C2d may be merged.

In operation S170, in response to the first queue read command 85, the memory device 100 may perform the read operations for the first to fourth planes P1 to P4 for the read time tR based on the merged first command C1 and second commands C2b, C2c, and C2d. After a lapse of the read time tR, in operation S175, the memory device 100 may perform the data output operation Dout for transmitting read data to the controller 200 and release the read commands C1 and C2b to C2d stored in the command queue 121 from the command queue 121.

In operation S180, the controller 200 may transmit to the memory device 100 the first queue read command 86 instructing execution of a plane merge operation and a read operation for the read commands stored in the command queue 121. In operation S190, in response to the first queue read command 86, the memory device 100 may perform a read operation for the first plane P1 for the read time tR based on the second command C2a corresponding to the first plane P1. In this regard, as a queue corresponding to the second to fourth planes P2 to P4 is empty in the command queue 121 of the memory device 100, the memory device 100 may perform a read operation only for the first plane P1. After a lapse of the read time tR, in operation S195, the memory device 100 may perform the data output operation Dout for transmitting read data to the controller 200 and release and erase the read command C2a stored in the command queue 121 from the command queue 121.

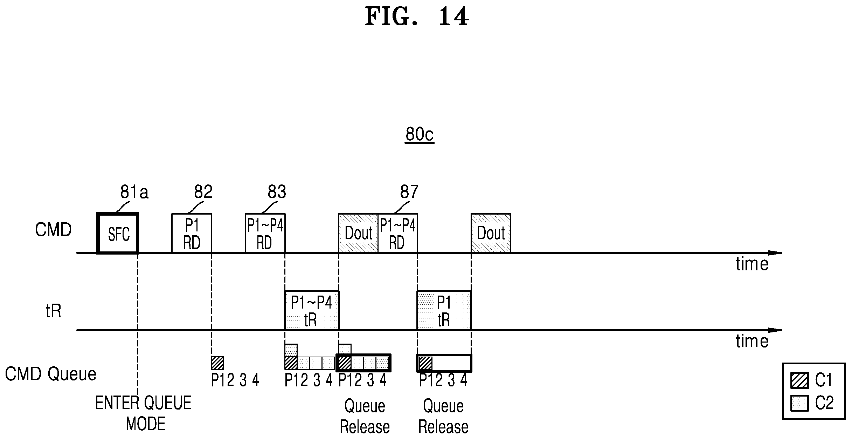

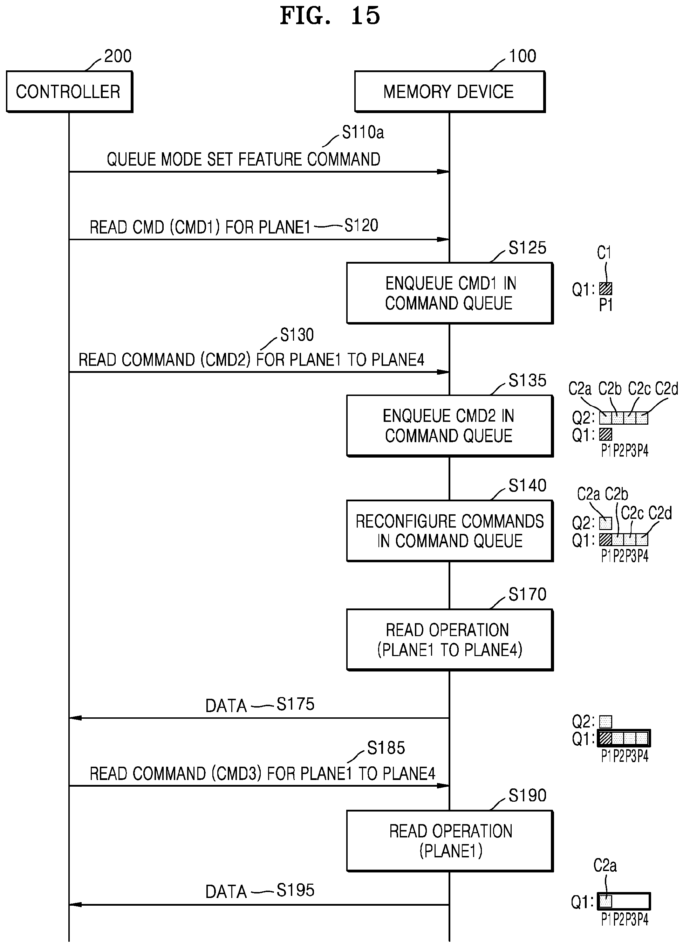

FIG. 14 is a timing chart illustrating a command queueing operation 80c according to embodiments. FIG. 15 is a flowchart illustrating an operation between the controller 200 and the memory device 100 according to embodiments.

Referring to FIGS. 14 and 15, the command queueing operation 80c may correspond to a modification example of the command queueing operation 80 of FIG. 8, and the description provided in relation to FIGS. 8 and 9 may be applied to this embodiment as well. In operation S110a, the controller 200 may transmit a set feature command 81a for setting a queue mode to the memory device 100. In response to the set feature command 81a, the memory device 100 may activate the queue mode.

In operation S120, the controller 200 may transmit the read command 82 for the first plane P1. In operation S125, in response to the read command 82, the memory device 100 may store the read command 82 in the command queue 121 as the first command C1 for the first plane P1. In operation S130, the controller 200 may transmit to the memory device 100 the read command 83 for the first to fourth planes P1 to P4. In operation S135, in response to the read command 83, the memory device 100 may store the read command 83 in the command queue 121 as second commands C2a to C2d for the first to fourth planes P1 to P4.

In operation S140, the memory device 100 may reconfigure the commands stored in the command queue 121 based on information set by the set feature command 81a. For example, the memory device 100 may move the second commands C2b, C2c, and C2d stored in the second queue Q2 to the first queue Q1. By doing so, the first queue Q1 may store the first command C1 for the first plane P1 and the second commands C2b, C2c, and C2d for the second to fourth planes P2 to P4, and the second queue Q2 may store the second command C2a for the first plane P1.

In operation S170, based on the information set by the set feature command 81a, the memory device 100 may perform the read operations for the first to fourth planes P1 to P4 for the read time tR based on the merged read command. After a lapse of the read time tR, in operation S175, the memory device 100 may perform the data output operation Dout for transmitting read data to the controller 200 and release the read commands C1 and C2b to C2d stored in the command queue 121 from the command queue 121.

In operation S185, the controller 200 may transmit to the memory device 100 read command 87 for the first to fourth planes P1 to P4. In operation S190, in response to the read command 87, the memory device 100 may perform a read operation for the first plane P1 for the read time tR based on the second command C2a corresponding to the first plane P1. In this regard, as a queue corresponding to the second to fourth planes P2 to P4 is empty in the command queue 121 of the memory device 100, the memory device 100 may perform a read operation only for the first plane P1. After a lapse of the read time tR, in operation S195, the memory device 100 may perform the data output operation Dout for transmitting read data to the controller 200 and release and erase the read command C2a stored in the command queue 121 from the command queue 121.

As such, according to the embodiments, the controller 200 may not transmit a queue execution command, e.g., a first queue read command to the memory device 100. According to the embodiments, when the set feature command 81a is pre-received from the controller 200, the memory device 100 may determine queue execution conditions based on information included in the set feature command 81a, merge queued commands when the queue execution conditions are satisfied, and execute a memory operation according to the merged command. Accordingly, even when no separate queue execution command is received from the controller 200, the memory device 100 may merge the commands stored in the command queue 121 and perform the memory operation according to the merged command.

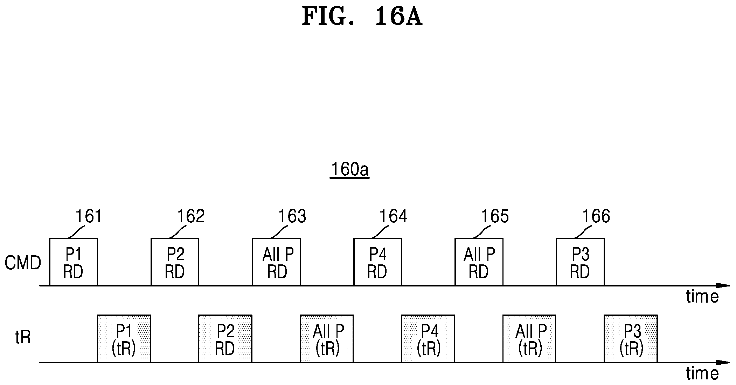

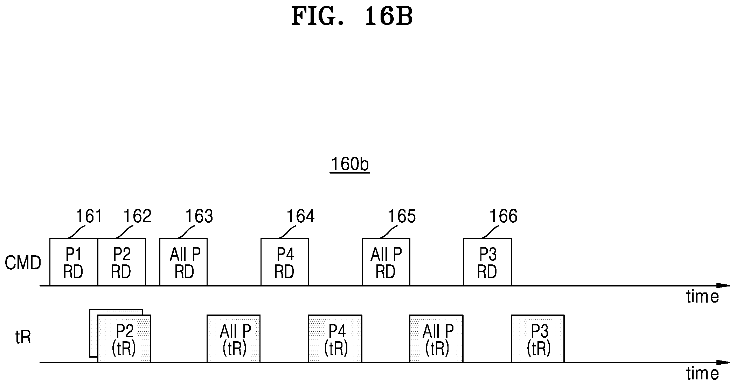

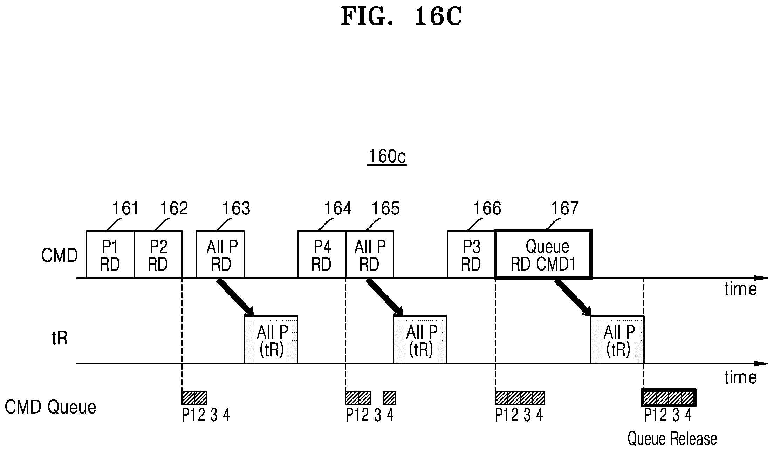

FIG. 16A is a timing chart illustrating a read operation 160a according to a comparative example, FIG. 16B is a timing chart illustrating a read operation 160b according to a comparative example, and FIG. 16C is a timing chart illustrating a read operation 160c according to embodiments. For convenience, the data output operation is omitted in FIGS. 16A to 16C.

Referring to FIG. 16A, the memory device may sequentially receive from the controller a read command 161 for the first plane P1, a read command 162 for the second plane P2, a read command 163 for the all planes, a read command 164 for the fourth plane P4, a read command 165 for all planes, and a read command 166 for the third plane P3. In response to each of the read commands 161 to 166, the memory device may perform a read operation for the read time tR. According to the read operation 160a, as a subsequent command is received after each read operation is completed, the total read time taken for the read commands 161 to 166 may correspond to 6*tR.

Referring to FIG. 16B, when the memory device uses plane independent read (PIR), the read operation for the first plane P1 corresponding to the read command 161 and the read operation for the second plane P2 corresponding to the read command 162 may be performed in a parallel manner. According to the read operation 160b, the total read time of the read commands 161 to 166 may correspond to 5*tR.

Referring to FIG. 16C, according to the embodiments, when the read commands 161 and 162 are received sequentially, the commands may be queued in the command queue, and read operations corresponding to the read commands 161 and 162 may not be performed immediately. In response to the read command 163, the read operation for all planes may be performed for the read time tR. When the read command 164 is received, the corresponding command may be queued in the command queue, and a read operation corresponding to the read command 164 may not be performed immediately. In response to the read command 165, the read operation for all planes may be performed for the read time tR.

When the read command 166 is received, the corresponding command may be queued in the command queue, and the commands corresponding to the first to fourth planes P1 to P4 may all be queued in the command queue 121. When a queue execution command, for example, a first queue read command 167 is received, the memory device may merge the read commands queued in the command queue and perform read operations for the full planes for the read time tR according to the merged read command. According to the read operation 160c, the total read time of the read commands 161 to 166 may correspond to 3*tR. As such, according to the embodiments, the total read time may be reduced significantly, and the performance of the memory device may be improved.

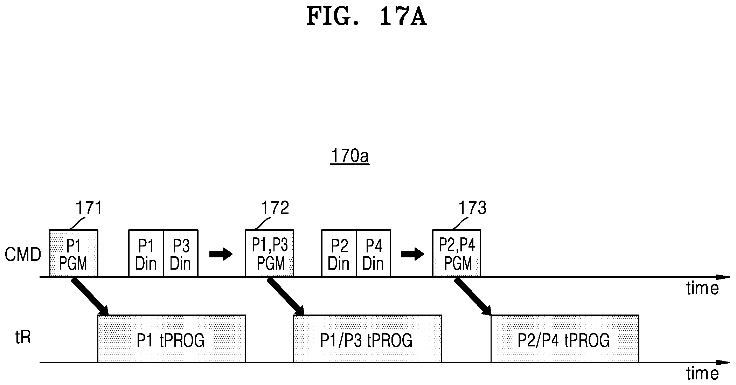

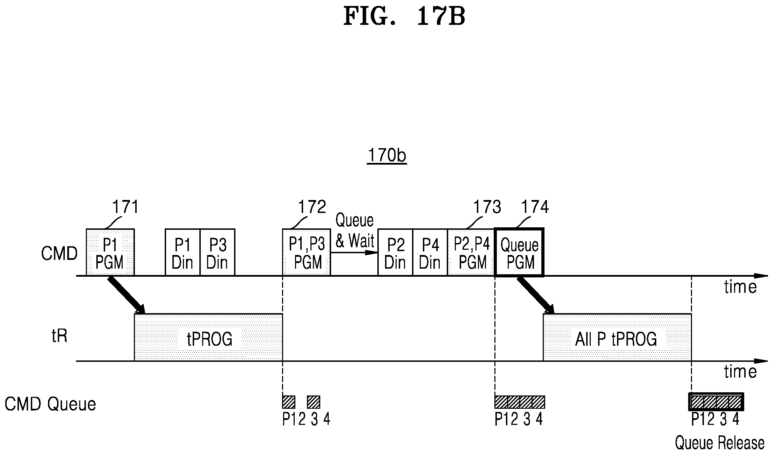

FIG. 17A is a timing chart illustrating a program operation 170a according to a comparative example, and FIG. 17B is a timing chart illustrating a program operation 170b according to embodiments.

Referring to FIG. 17A, the memory device may receive from the controller a program command 171 for the first plane P1 and perform, in response to the program command 171, a program operation with respect to the first plane P1 for program time tPROG. Next, the memory device may sequentially receive program data regarding the first plane P1 and program data regarding the third plane P3, receive a program command 172 for the first and third planes P1 and P3, and perform, in response to the program command 172, a program operation for the first and third planes P1 and P3 for the program time tPROG. Then, the memory device may sequentially receive program data regarding the second plane P2 and program data regarding the fourth plane P4, receive a program command 173 for the second and fourth planes P2 and P4, and perform, in response to the program command 173, a program operation for the second and fourth planes P2 and P4 for the program time tPROG. Thus, the total program time may correspond to 3*tPROG.

Referring to FIG. 17B, according to the embodiments, when the program command 172 for the first and third planes P1 and P3 is received, the memory device 100 may queue corresponding commands in the command queue 121 and may not immediately perform a program operation corresponding to the program command 172. Then, when the program command 173 for the second and fourth planes P2 and P4 is received, the memory device 100 may queue corresponding commands in the command queue 121 and may not immediately perform a program operation corresponding to the program command 173.

The memory device 100 may receive from the controller 200 a queue execution command, for example, a queue program command 174, merge, in response to the queue program command 174, commands queued in the command queue 121, and perform a program operation with respect to the first to fourth planes P1 to P4 for the program time tPROG according to the merged command. When the program operation is completed, the memory device 100 may release the queued commands from the command queue 121. According to the program operation 170b, the total program time taken for the program commands 171 to 173 may correspond to 2*tPROG. As such, according to the embodiments, the total program time may be reduced significantly, and the performance of the memory device may be improved.

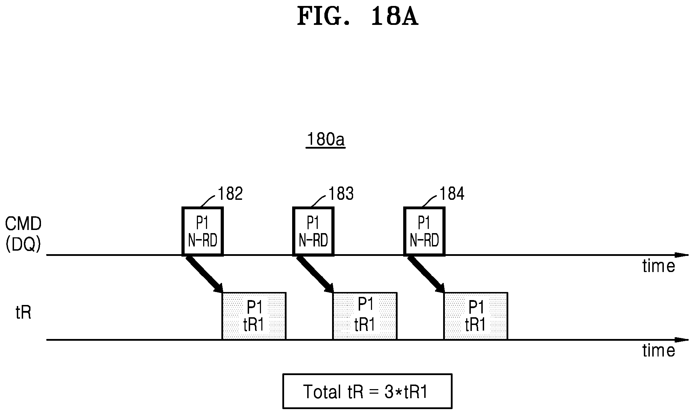

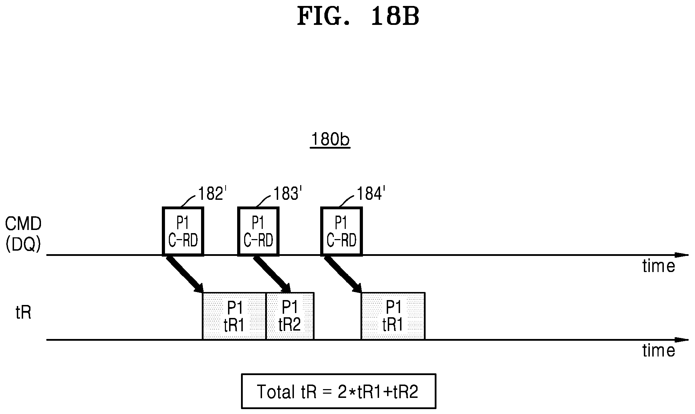

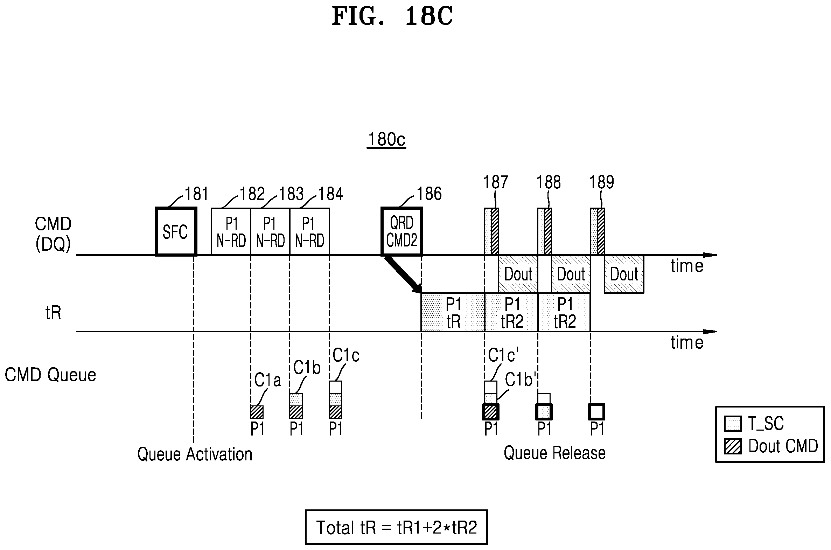

FIG. 18A is a timing chart illustrating a read operation 180a according to a comparative example, FIG. 18B is a timing chart illustrating a read operation 180b according to a comparative example, and FIG. 18C is a timing chart illustrating a read operation 180c according to embodiments.

Referring to FIG. 18A, the memory device may receive a first normal read command 182 from the controller and perform, in response to the first normal read command 182, a read operation for the first address of the first plane P1 for the first read time tR1 without charge recycle. After a lapse of the first read time tR1, the memory device may receive a second normal read command 183 from the controller and perform, in response to the second normal read command 183, a read operation for the second address of the first plane P1 for the first read time tR1 without charge recycle. After a lapse of the first read time tR1, the memory device may receive a third normal read command 184 from the controller and perform, in response to the third normal read command 184, a read operation for the third address of the first plane P1 for the first read time tR1 without charge recycle. Accordingly, the total read time may correspond to 3*tR1.

Referring to FIG. 18B, the memory device may receive a first cache read command 182' from the controller and perform, in response to the first cache read command 182', a read operation for the first address of the first plane P1 for the first read time tR1. In this regard, as a read operation for the first plane P1 is not performed prior to the first cache read command 182', despite the first cache read command 182', a read operation may be performed without charge recycle. When a second cache read command 183' is received from the controller before a reference time in the first read time tR1 elapses, the memory device may perform, in response to the second cache read command 183', a read operation with respect to the second address of the first plane P1 for the second read time tR2 through charge recycle. When a third cache read command 184' is received from the controller after a reference time in the second read time tR2 has elapsed, despite the third cache read command 184', the memory device may perform a read operation with respect to the third address of the first plane P1 for the first read time tR1 without charge recycle. Accordingly, the total read time may correspond to 2*tR1+tR2.

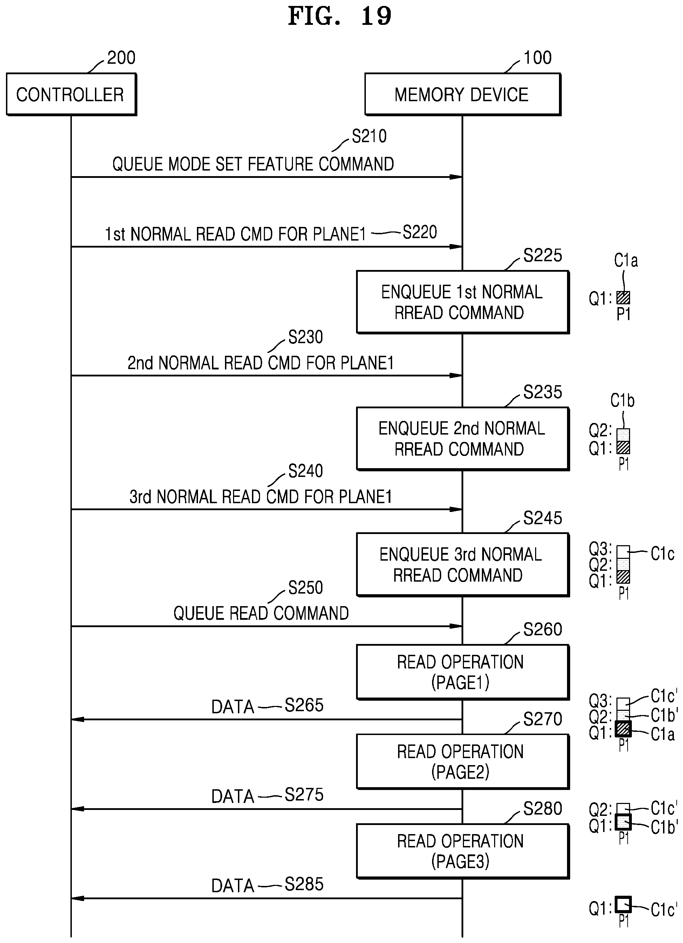

FIG. 19 is a flowchart illustrating an operation between the controller 200 and the memory device 100 according to embodiments.

Referring to FIGS. 18C and 19, in operation S210, the controller 200 may transmit a set feature command 181 (e.g., a queue mode set feature command) for setting a queue mode to the memory device 100. In response to the set feature command 181, the memory device 100 may activate the queue mode. In operation S220, the controller 200 may transmit to the memory device 100 the first normal read command 182 for the first plane P1. In operation S225, in response to the first normal read command 182, the memory device 100 may store the first normal read command 182 in the command queue 121 as a first command C1a for the first plane P1. For example, the memory device 100 may store the first command C1a in the first queue Q1.

In operation S230, the controller 200 may transmit to the memory device 100 the second normal read command 183 for the first plane P1. In operation S235, in response to the second normal read command 183, the memory device 100 may store the second normal read command 183 in the command queue 121 as a second command C1b for the first plane P1. For example, the memory device 100 may store the second command C1b in the second queue Q2. In operation S240, the controller 200 may transmit to the memory device 100 the third normal read command 184 for the first plane P1. In operation S245, in response to the third normal read command 184, the memory device 100 may store the third normal read command 184 in the command queue 121 as a third command C1c for the first plane P1. For example, the memory device 100 may store the third command C1c in the third queue Q3.

In operation S250, the controller 200 may transmit a queue execution command, e.g., a second queue read command 186 to the memory device 100. In this regard, the second queue read command may change normal read commands stored in the command queue 121 to cache read commands and instruct execution of cache read operations according to the changed cache read commands. More specifically, in response to the second queue read command 186, the queue manager 122 may reconfigure the commands queued in the command queue 121 by maintaining the first normal read command 182 that is received first and changing the second and third normal read commands 183 and 184 that are received thereafter to the first and second cache read commands C1b' and C1c'.

In operation S260, according to the reconfigured command, i.e., the first command C1a, the memory device 100 may perform a normal read operation for the first address (e.g., first page) for the first read time tR1. When the normal read operation for the first page is completed, data may be dumped from a sensing latch in a page buffer (e.g., 140 of FIG. 3) to a cache latch for dumping time T_SC, and the first normal read command C1a stored in the command queue 121 may be released from the command queue 121. In operation S265, in response to a data output command 187 received from the controller 200, the memory device 100 may output data read from the first page to the controller 200.

In operation S270, according to the reconfigured command, i.e., a first cache read command C1b', the memory device 100 may perform a cache read operation for the second address (e.g., second page) for the second read time tR2. When the cache read operation of the second page is completed, data may be dumped from the sensing latch in the page buffer to the cache latch during the dumping time T_SC, and the first cache read command C1b' stored in the command queue 121 may be released from the command queue 121. In operation S275, in response to a data output command 188 received from the controller 200, the memory device 100 may output data read from the second page to the controller 200.

In this regard, the cache read operation for the second address, i.e., operation S270 may be automatically triggered without a separate read command. In embodiments, in the SCA method, a cache read operation for the second address may be triggered in response to a select chip terminate (SCT) packet. In embodiments, the cache read operation for the second address may be triggered in response to a return of a ready/busy signal indicating completion of prior internal read operation. In embodiments, the cache read operation for the second address may be triggered in response to a return of a ready/busy signal and a SCT packet.

In operation S280, according to the reconfigured command, i.e., a second cache read command C1c', the memory device 100 may perform a cache read operation for the third address (e.g., third page) for the second read time tR2. When the cache read operation of the third page is completed, data may be dumped from the sensing latch in the page buffer to the cache latch during the dumping time T_SC, and the second cache read command C1c' stored in the command queue 121 may be released from the command queue 121. In operation S285, in response to a data output command 189 received from the controller 200, the memory device 100 may output data read from the third page to the controller 200.

As such, operations that are queue-stacked in the same plane (e.g., the first plane P1) may have, for example, different string select line addresses, different word line addresses, and different logic bits (e.g., LSB, CSB, and MSB) from each other. In some embodiments, two or more memory operations may be performed consecutively by switching between two different pages addresses in the same plane. In this regard, by applying a certain charge recycle method, charges remaining in a word line may not be recovered in a prior operation and may be used continuously in a subsequent operation, which leads to improved operational performance of core area. According to the disclosure, by merging and reconfiguring a plurality of pages stored in the command queue 121 based on the unit of a page, the timing between the merged commands may be maintained continuously. Accordingly, the use of charge recycle technology may be maximized, and the performance with respect to consecutive page operations in the same plane may be improved.

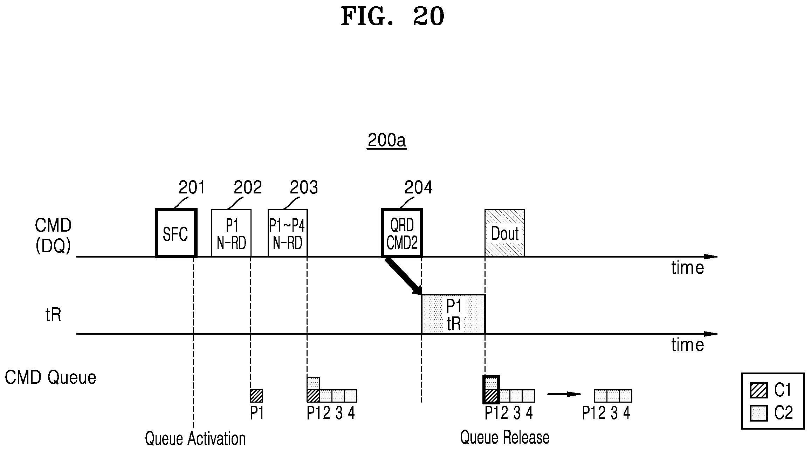

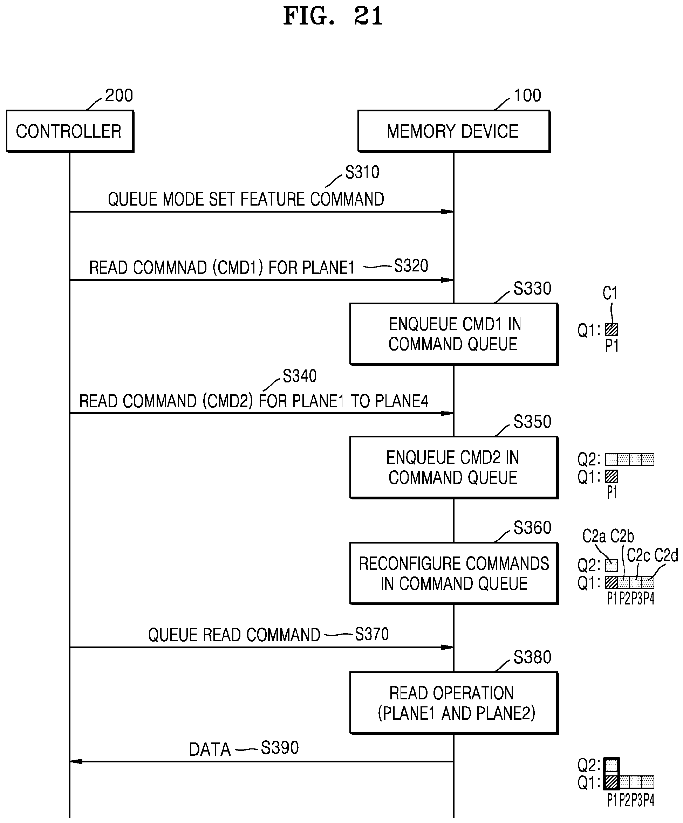

FIG. 20 is a timing chart illustrating a command queueing operation 200a according to embodiments. FIG. 21 is a flowchart illustrating an operation between the controller 200 and the memory device 100 according to embodiments.

Referring to FIGS. 20 and 21, in operation S310, the controller 200 may transmit a set feature command 201 for setting a queue mode to the memory device 100. In response to the set feature command 201, the queue mode may be activated in the memory device 100, and the memory device 100 may perform an on-chip command queueing operation. In operation S320, the controller 200 may transmit to the memory device 100 a normal read command 202 for the first plane P1. In operation S330, the memory device 100 may store the normal read command 202 in the command queue 121. In operation S340, the controller 200 may transmit to the memory device 100 a normal read command 203 for the first to fourth planes P1 to P4. In operation S350, the memory device 100 may store the normal read command 203 in the command queue 121.

In operation S360, the memory device 100 may reconfigure the commands stored in the command queue 121. In operation of S370, the controller 200 may transmit a queue execution command, e.g., a second queue read command 204 to the memory device 100. The second queue read command 204 may instruct merging of normal read commands queued based on a time domain and execution of a memory access according to the merged command. In operation S380, in response to the second queue read command 204, the memory device 100 may merge the normal read commands C1 and C2a corresponding to the first plane P1 in the command queue 121 based on the time domain and perform a read operation for partial areas (e.g., first and second pages) of the first plane P1 based on the merged normal read command for the read time tR. After a lapse of the read time tR, in operation S390, the memory device 100 may perform the data output operation Dout for transmitting read data to the controller 200 and simultaneously release the read commands C1 and C2a stored in the command queue 121 from the command queue 121.

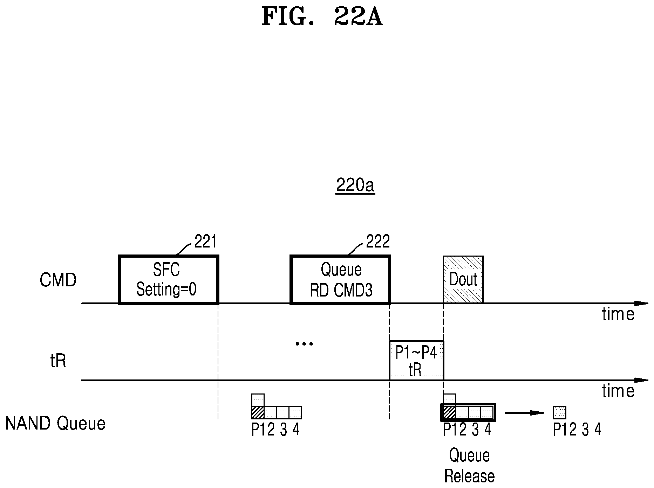

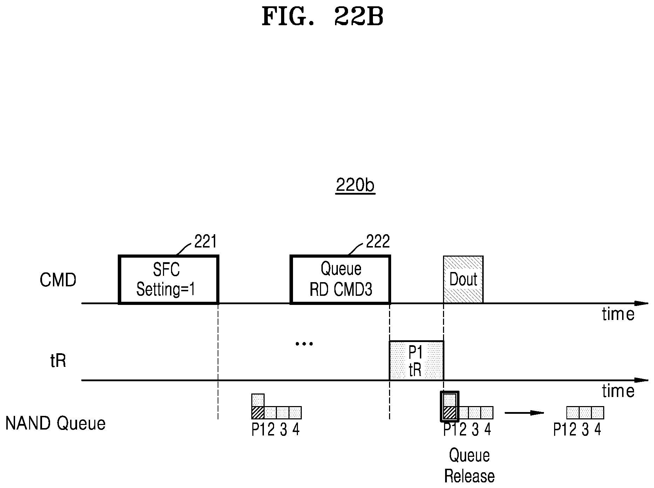

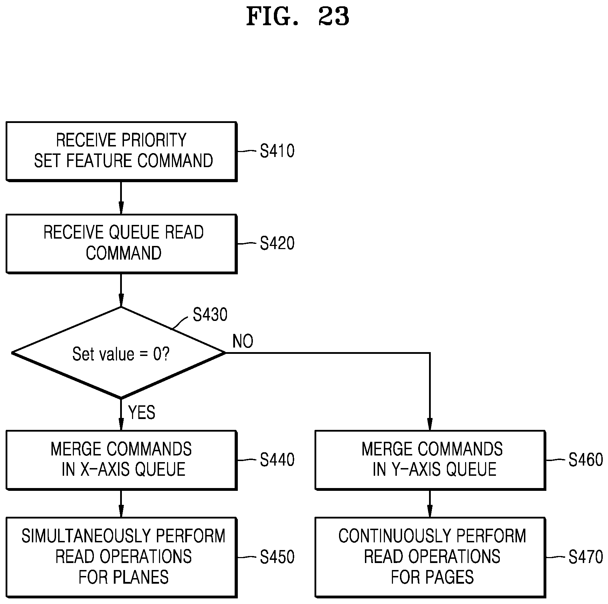

FIG. 22A is a timing chart illustrating a command queueing operation in a first queue mode 220a according to embodiments, and FIG. 22B is a timing chart illustrating a command queueing operation in a second queue mode 220b according to embodiments. FIG. 23 is a flowchart of a method of operating the memory device 100 according to embodiments.

Referring to FIGS. 22A to 23, in operation S410, the memory device 100 may receive from the controller 200 a set feature command 221 for setting a priority. The first queue mode 220a may be a mode in which the space axis is prioritized, and more specifically, may be a queue mode in which the command-merging in the space domain is prioritized over the command-merging in the time domain. For example, when the set value included in the set feature command 201 is 0, the first queue mode 220a in which the command-merging in the space domain is prioritized may be activated. The second queue mode 220b may be a mode in which the time axis is prioritized, and more specifically, may be a queue mode in which the command-merging in the time domain is prioritized over the command-merging in the space domain. For example, when the set value included in the set feature command 221 is 1, the second queue mode 220b in which the command-merging in the time domain is prioritized may be activated.

In operation S420, the memory device 100 may receive from the controller 200 a queue execution command, for example, a queue read command 222. In operation S430, the memory device 100 may identify whether the set value included in the set feature command 221 is 0. When the set value is identified as 0, in operation S440, the memory device 100 may merge commands according to the X-axis, i.e., based on the space domain in the command queue. In operation S450, the memory device 100 may simultaneously perform read operations for the first to fourth planes P1 to P4. When the set value is identified as 1 (e.g. not 0), in operation S460, the memory device 100 may merge commands according to the Y-axis, i.e., based on the time domain in the command queue 121. In operation S470, the memory device 100 may continuously perform read operations for pages, that is, multiple addresses of the first plane P1.

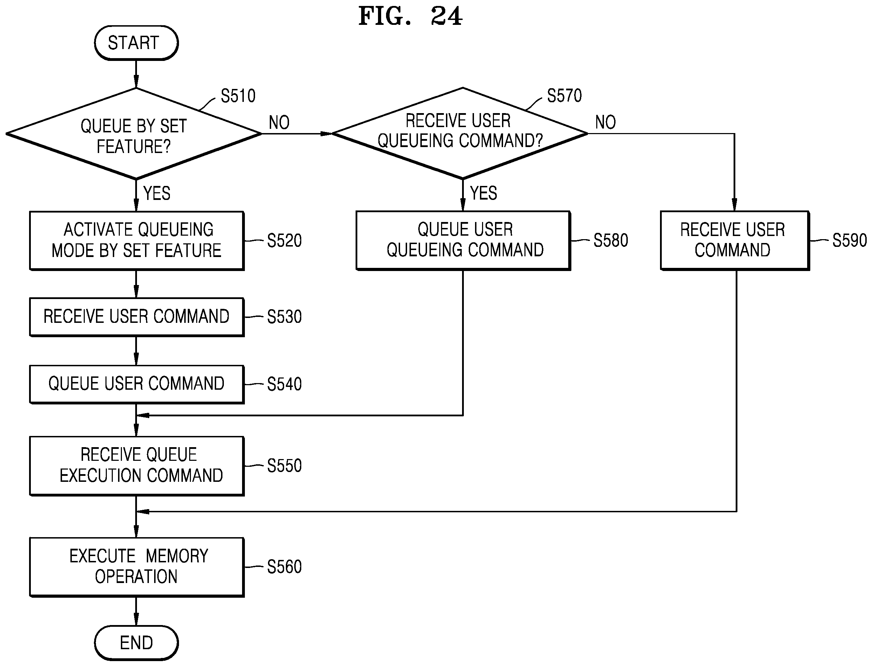

FIG. 24 is a flowchart illustrating a command queueing operation method according to embodiments.

Referring to FIG. 24, a command queueing operation method according to embodiments may be performed in a memory device (e.g., 100 of FIG. 1). For example, in response to a set feature, a user command, a queue execution command, etc. received from the controller, the memory device may perform the command queueing operation. However, the disclosure is not limited thereto, and in some embodiments, the command queueing operation method may be performed in the controller (e.g., 200' of FIG. 6). For example, the controller may perform the command queueing operation based on a command received from the host. The descriptions provided in relation to FIGS. 1 to 23 may be applied to this embodiment as well.

In operation S510, whether the queue mode or the queueing mode is set by the set feature may be determined. For example, the queue manager 122 or the queue manager 220 may identify whether the queueing mode is set. When the queueing mode is identified as being set by the set feature, in operation S520, the queueing mode may be activated by the set feature. For example, the queue mode or the queueing mode may be activated in the memory device 100 or the controller 200'.

In operation S530, a user command (e.g., a program command, a read command, an erase command, etc.) may be received. In operation S540, the user command may be queued in the command queue. The user command may not be executed immediately and may act as a queueing command. For example, the memory device 100 may queue the user command in the command queue 121. For example, the controller 200' may queue the user command in the command queue 210.

In operation S550, a queue execution command may be received. For example, the memory device 100 may receive from the controller 200 a first queue execution command (e.g., 43 of FIG. 4) instructing merging of commands corresponding to a plurality of planes and execution of the merged command. For example, the memory device 100 may receive from the controller 200 a second queue execution command (e.g., 53 of FIG. 5) instructing merging of commands corresponding to a plurality of addresses (e.g., a plurality of pages) included in a plane and execution of the merged command.

For example, when a priority is set to a space axis or a time axis, the memory device 100 may receive from the controller 200 a third queue execution command (e.g., 222 of FIG. 22) instructing merging of commands according to the priority and execution of the merged command. In operation S560, in response to the queue execution command, a memory operation according to the reconfigured command in the command queue may be performed. For example, in response to the queue execution command, the memory device 100 may perform a program operation, a read operation, etc.

When the queueing mode is identified as not being set by the set feature, in operation S570, whether a user queueing command (e.g., a read queueing command, a program queueing command, or an erase queueing command) is received may be identified. In this regard, the user queueing command may be set differently from the user command. As such, by using a separate user queueing command, the queueing operations may be activated per command.

When the user queueing command is identified as being received, in operation S580, the user queueing command may be queued in the command queue. The user queueing command may not be executed immediately. For example, the memory device 100 may queue the user queueing command in the command queue 121. For example, the controller 200' may queue the user queueing command in the command queue 210. When the user queueing command is identified as not being received, in operation S590, a user command (e.g., a read command, a program command, or an erase command) may be received. The user command may be executed immediately, and the memory device 100 may perform a memory operation according to the user command.

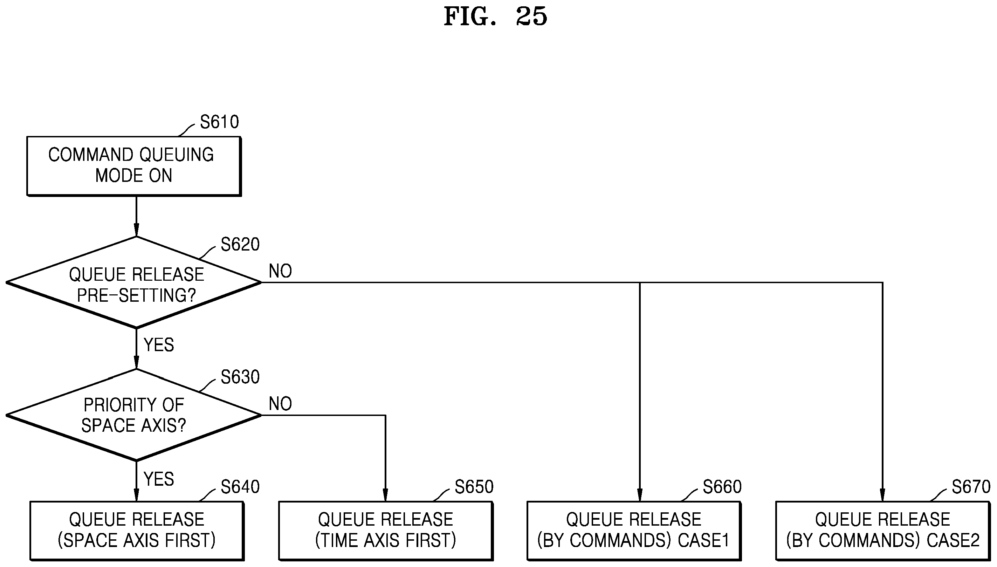

FIG. 25 is a flowchart illustrating a command queueing operation method according to embodiments.

Referring to FIG. 25, in operation S610, a command queueing mode may be activated. In operation S620, whether queue release conditions are preset may be identified. When the queue release conditions are identified as being preset, in operation S630, whether the space axis is prioritized may be identified. When the space axis is identified as being prioritized, in operation S640, the queue release for the space axis may be performed first. When the space axis is not prioritized, in operation S650, the queue release for the time axis may be performed first. When the queue release conditions are not preset, the queue release may be performed based on a separate command. In operation S660, the queue release may be performed in response to the queue execution command (Case 1). In operation S670, the commands stored in the command queue may be reconfigured based on a reconfigure command, and the queue release may be performed in response to the queue execution command (Case 2).

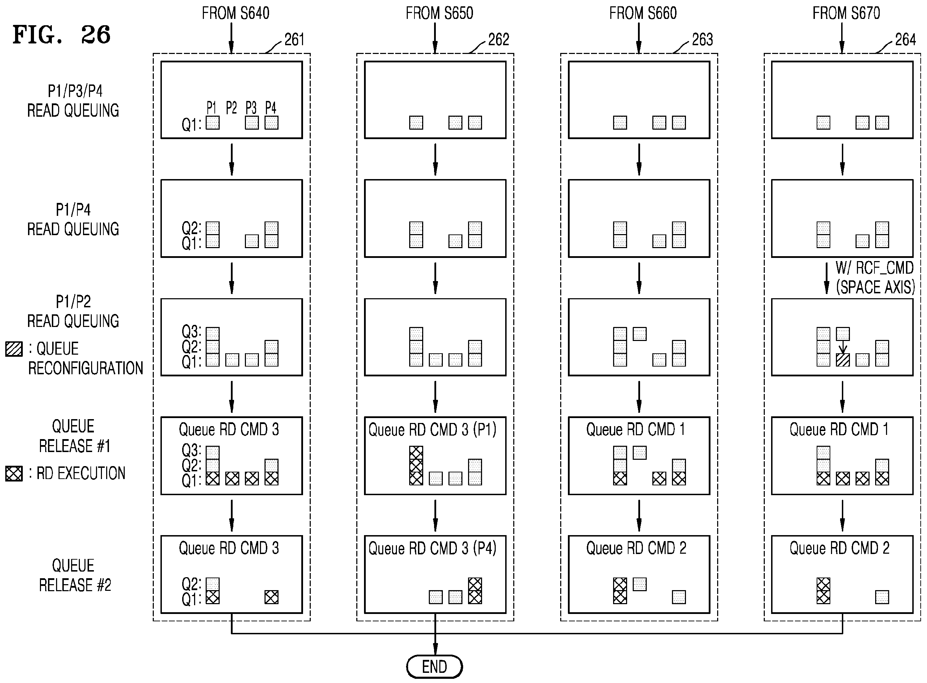

FIG. 26 is a diagram illustrating a command queueing operation and a queue release operation according to embodiments.

Referring to FIG. 26, for example, in a case where the priority is preset to the space axis (261) and in a case where the priority is preset to the time axis (262), the queue mode may be pre-activated. For example, read commands for the first, third, and fourth planes P1, P3, and P4 may be queued in the first queue Q1 of the command queue, read commands for the first and fourth planes P1 and P4 may be queued in the second queue Q2 of the command queue, a read command for the first plane P1 may be queued in the third queue Q3 of the command queue, and a read command for the second plane P2 may be queue in the first queue Q1 of the command queue.

In the case where the priority is preset to the space axis (261), for example, when the set value of the set feature command is set as 0, in response to the third queue read command (e.g., 202 of FIGS. 22A and 22B), the read commands for the first to fourth planes P1 to P4 may be merged based on the space axis. More specifically, the read commands queued in the first queue Q1 may be merged, read operations of the first to fourth planes P1 to P4 may be performed simultaneously according to the merged command, and then the read command queued in the first queue Q1 may be released. Next, in response to the third queue read command (e.g., 202 of FIGS. 22A and 22B), the read commands for the first to fourth planes P1 to P4 may be merged based on the space axis. More specifically, the read commands queued in the first queue Q1 may be merged, read operations of the first to fourth planes P1 to P4 may be performed simultaneously according to the merged command, and then the read command queued in the first queue Q1 may be released.

In the case where the priority is preset to the time axis (262), for example, when the set value of the set feature command is set as 1, in response to the third queue read command (e.g., 202 of FIGS. 22A and 22B) for the first plane P1, the read commands for the addresses (e.g., pages) included in the first plane P1 may be merged based on the time axis. More specifically, the read commands queued in the first to third queues Q1, Q2, and Q3 for the first plane P1 may be merged, the read operations for the addresses (e.g., pages) included in the first plane P1 may be performed consecutively according to the merged read command, and then the read command queued in the first queue Q1 may be released. Next, in response to the third queue read command (e.g., 202 of FIGS. 22A and 22B) for the fourth plane P4, the read commands for the pages included in the fourth plane P4 may be merged based on the time axis. More specifically, the read commands queued in the first and second queues Q1 and Q2 for the fourth plane P4 may be merged, the read operations for the pages included in the fourth plane P4 may be performed consecutively according to the merged read command, and then the read commands queued in the fourth queue Q4 may be released.

For example, in Case 1 (263) in which the queue release is performed without command reconfiguration, the queue mode may not be pre-activated. For example, read commands for the first, third, and fourth planes P1, P3, and P4 may be queued in the first queue Q1 of the command queue, read commands for the first and fourth planes P1 and P4 may be queued in the second queue Q2 of the command queue, and read commands for the first and second planes P1 and P2 may be queued in the third queue Q3 of the command queue.

In this regard, when the first queue read command (e.g., 43 of FIG. 4) instructing space axis-based merging and execution of commands is received, the read commands queued in the first queue Q1 may be merged, the read operations for the first, third, and fourth planes P1, P3, and P4 may be performed simultaneously according to the merged read command, and the read commands queued in the first queue Q1 may be released. Next, when the second queue read command (e.g., 53 of FIG. 5) instructing time axis-based merging and execution of commands is received, the read commands for the addresses (e.g., pages) included in the first plane P1 may be merged. More specifically, the read commands queued in the first and second queues Q1 and Q2 for the first plane P1 may be merged, the read operations for the pages included in the first plane P1 may be performed consecutively according to the merged read command, and then the read commands queued in the first queue Q1 may be released.

For example, in Case 2 (264) in which the command reconfiguration and the queue release are performed, the queue mode may not be pre-activated. For example, read commands for the first, third, and fourth planes P1, P3, and P4 may be queued in the first queue Q1 of the command queue, read commands for the first and fourth planes P1 and P4 may be queued in the second queue Q2 of the command queue, and read commands for the first and second planes P1 and P2 may be queued in the third queue Q3 of the command queue. In this regard, when a reconfigure command RCF_CMD is received, the read commands corresponding to the second plane P2 that are queued in the third queue Q3 may be moved to the first queue Q1.

When the first queue read command (e.g., 43 of FIG. 4) instructing space axis-based merging and execution of commands is received, the read commands queued in the first queue Q1 may be merged, the read operations for the first to fourth planes P1 to P4 may be performed simultaneously according to the merged read command, and the read commands queued in the first queue Q1 may be released. Next, when the second queue read command (e.g., 53 of FIG. 5) instructing time axis-based merging and execution of commands is received, the read commands for the pages included in the first plane P1 may be merged. More specifically, the read commands queued in the first and second queues Q1 and Q2 for the first plane P1 may be merged, the read operations for the pages included in the first plane P1 may be performed consecutively according to the merged read command, and then the read commands queued in the first queue Q1 may be released.

In some embodiments, the storage device (100 and 100') described above may include at least one of an embedded memory and a detachable external memory. When the storage device (100 and 100') is a solid-state disk (SSD), the storage device (100 and 100') may be a device complying with the NVMe standard. When the storage device (100 and 100') is an embedded memory or an external memory, the storage device (100 and 100') may be a device complying with the universal flash storage (UFS) or embedded multimedia card (eMMC) standard.

In some embodiments, the storage device (100 and 100') may further include a computing device capable of performing data processing on data received from a host and performing a task assigned by the host. For example, the computing device may perform a task based on various neural networks such as a convolution neural network (CNN), a region with convolution neural network (R-CNN), a region proposal network (RPN), a recurrent neural network (RNN), a stacking-based deep neural network (S-DNN), a state-space dynamic neural network (S-SDNN), a deconvolution network, a deep belief network (DBN), a restricted Boltzman machine (RBM), a fully convolutional network, a long short-term memory (LSTM) network, a classification network, etc.

For example, the computing device may be implemented by a graphic processing unit (GPU), a digital signal processor (DSP), a field programmable gate array (FPGA), an application specific integrated circuit (ASIC), a neural processing unit (NPU), etc. However, the disclosure is not limited thereto, and the computing device may be implemented as various types of accelerators configured to perform data processing required for performing assigned tasks, for example, data operations (e.g., an arithmetic operation, a convolution operation, a pooling operation, etc.) in a parallel manner.

While the disclosed concepts have been particularly shown and described with reference to embodiments thereof, it will be understood that various changes in form and details may be made therein without departing from the scope of the following claims.

## Claims

1. A memory device (100) comprising:
a memory cell array (110) comprising a plurality of planes (PL), wherein each of the plurality of planes (PL) comprises a plurality of memory blocks (BLK1), and each of the plurality of memory blocks (BLK1) comprises a plurality of pages (PAGE1); and
control logic (120) configured to control the memory cell array (110),
wherein:
the control logic (120) comprises:
a command queue (121) configured to store a plurality of commands received sequentially from a controller (200); and
a queue manager (122) configured to reconfigure an execution order of memory operations respectively corresponding to the plurality of commands or types of the plurality of commands by merging at least two commands from among the plurality of commands to obtain a merged command, and
the control logic (120) is configured to control a memory operation for the memory cell array (110) according to the merged command.

2. The memory device of claim 1, wherein:
the command queue (121) stores a first command corresponding to a first plane from among the plurality of planes (PL) and a second command corresponding to a second plane from among the plurality of planes (PL), and
the queue manager (122) is further configured to merge the first command and the second command to obtain the merged command and store the merged command in the command queue (121).

3. The memory device of claim 2, wherein the control logic (120) is further configured to perform, in response to the merged command, a first memory operation corresponding to the first plane and a second memory operation corresponding to the second plane in a parallel manner.

4. The memory device of claim 1, wherein:
the command queue (121) stores a first command corresponding to a first page from among the plurality of pages (PAGE1) and a second command corresponding to a second page from among the plurality of pages (PAGE1), and
the queue manager (122) is further configured to merge the first command and the second command to obtain the merged command and store the merged command in the command queue (121).

5. The memory device of claim 4, wherein the control logic (120) is further configured to perform, in response to the merged command, a first memory operation corresponding to the first page and a second memory operation corresponding to the second page in a consecutive manner.

6. The memory device of any preceding claim, wherein:
the control logic (120) is further configured to receive from the controller (200) a set feature command for setting a queue mode,
the queue manager (122) is enabled in response to the received set feature command, and
when the queue manager (122) is enabled, the queue mode is activated.

7. The memory device of claim 6, wherein the control logic (120) is further configured to:
receive from the controller (200) a read command corresponding to the plurality of planes (PL), and
perform, in response to the read command, read operations corresponding to the plurality of planes (PL) in a parallel manner.

8. The memory device of any preceding claim, wherein the control logic (120) is further configured to:
receive from the controller (200) a reconfigure command instructing reconfiguration of the commands stored in the command queue (121), and
reconfigure, in response to the reconfigure command, the commands stored in the command queue (121).

9. The memory device of any preceding claim, wherein the control logic (120) is further configured to:
receive from the controller (200) a first queue read command instructing merging and read operations with respect to read commands corresponding to the plurality of planes (PL), and
perform, in response to the first queue read command, read operations corresponding to the plurality of planes (PL)in a parallel manner.

10. The memory device of any preceding claim, wherein the control logic (120) is further configured to:
receive from the controller (200) a first queue program command instructing merging and program operations with respect to program commands corresponding to the plurality of planes (PL), and
perform, in response to the first queue program command, program operations corresponding to the plurality of planes (PL) in a parallel manner.

11. The memory device of any preceding claim, wherein the control logic (120) is further configured to:
receive from the controller (200) a second queue read command instructing merging and read operations with respect to read commands corresponding to the plurality of pages (PAGE1), and
perform, in response to the second queue read command, read operations corresponding to the plurality of pages (PAGE1) in a consecutive manner.

12. The memory device of any preceding claim, wherein:
the command queue (121) includes a first queue storing first commands corresponding to the plurality of planes (PL), and a second queue storing a second command corresponding to a first plane from among the plurality of planes (PL), and
the control logic (120) is further configured to:
receive from the controller (200) a set feature command for setting a priority on a space axis or a time axis;
activate a first queue mode determining the priority on the space axis when a set value included in the set feature command corresponds to a first value; and
activate a second queue mode determining the priority on the time axis when the set value included in the set feature command corresponds to a second value.

13. The memory device of claim 12, wherein the control logic (120) is further configured to:
receive a queue read command from the controller (200);
first perform, in the first queue mode, memory operations corresponding to the first commands stored in the first queue; and
first perform, in the second queue mode, memory operations corresponding to the first and second commands respectively stored in the first and second queues for the first plane.

14. A storage device (10') comprising:
a memory device (100') comprising a plurality of planes (PL), wherein each of the plurality of planes (PL) comprises a plurality of memory blocks (BLK1), and each of the plurality of memory blocks (BLK1) comprises a plurality of pages (PAGE1); and
a controller (200') configured to control the memory device (100'),
wherein the controller (200') comprises:
a command queue (210) configured to store a plurality of commands received sequentially from a host; and
a queue manager (220) configured to reconfigure an execution order of memory operations respectively corresponding to the plurality of commands or types of the plurality of commands by merging at least two commands from among the plurality of commands to obtain a merged command,
the controller (200') is configured to transmit the merged command to the memory device (100'), and
the memory device (100') is configured to perform a memory operation corresponding to the merged command.

15. The storage device of claim 14, wherein:
the command queue (210) stores a first command corresponding to a first plane from among the plurality of planes (PL) and a second command corresponding to a second plane from among the plurality of planes (PL), and
the queue manager (220) is configured to merge the first command and the second command to obtain the merged command and store the merged command in the command queue (210).
